(19) Europäisches Patentamt
European Patent Office
Office européen des brevets

(11) EP 0 649 085 B1

# (12) EUROPEAN PATENT SPECIFICATION

(45) Date of publication and mention
of the grant of the patent:
**04.03.1998 Bulletin 1998/10**

(51) Int Cl.$^6$: **G06F 9/38**

(21) Application number: **94307583.8**

(22) Date of filing: **17.10.1994**

(54) **Microprocessor pipe control and register translation**

Fliessbandsteuerung und Registerübersetzung in Mikroprozessor

Contrôle de pipeline et traduction de régistre pour microprocesseur

(84) Designated Contracting States:
**CH DE ES FR GB IE IT LI NL**

(30) Priority: 18.10.1993 US 138789
18.10.1993 US 138272
18.10.1993 US 138280
18.10.1993 US 138574
18.10.1993 US 138902
18.10.1993 US 138655
18.10.1993 US 138901
18.10.1993 US 138573
18.10.1993 US 138281
18.10.1993 US 138278
18.10.1993 US 138572
18.10.1993 US 139597

(43) Date of publication of application:
**19.04.1995 Bulletin 1995/16**

(60) Divisional application: **97200512.8 / 0 779 577**

(73) Proprietor: **CYRIX CORPORATION**
**Richardson, Texas 75080 (US)**

(72) Inventors:
• **Bluhm, Mark**
 **Plano, Texas 75082 (US)**
• **Garibay, Raul A., Jr**
 **Dallas, Texas 75248 (US)**

• **McMahan, Steven C.**
 **Richardson, Texas 75082 (US)**
• **Beard, Douglas**
 **Dallas, Texas 75093 (US)**
• **Hervin, Mark W.**
 **Dallas, Texas 75252 (US)**
• **Eitrheim, John K.**
 **Dallas, Texas 75093 (US)**

(74) Representative: **Harris, Ian Richard et al**
 **D. Young & Co.,**
 **21 New Fetter Lane**
 **London EC4A 1DA (GB)**

(56) References cited:
 EP-A- 0 301 220      EP-A- 0 352 103
 EP-A- 0 399 762      EP-A- 0 420 457
 EP-A- 0 514 763      EP-A- 0 529 913
 WO-A-93/20505      GB-A- 2 263 565
 US-A- 4 752 973      US-A- 4 992 938

• **PROCEEDINGS COMPCON SPRING '93, 22 February 1993 , SAN FRANCISCO,US pages 109 - 116 MOORE 'The PowerPC 601 microprocessor'**
• **IBM TECHNICAL DISCLOSURE BULLETIN. vol. 36, no. 9B , September 1993 , NEW YORK US pages 381 - 381 'Collision vector table logical address, physical address, flag and valid bit fields description, function and use'**

## Description

This invention relates in general to microprocessors and to methods of allocating registers in microprocessors.

In the design of a microprocessor, instruction throughput i.e. the number of instructions executed per second, is of primary importance. The number of instructions executed per second may be increased by various means. The most straightforward technique for increasing instruction throughput is by increasing frequency at which the microprocessor operates. Increased operating frequency, however, is limited by fabrication techniques and also results in the generation of excess heat.

Thus, modern day microprocessor designs are focusing on increasing the instruction throughput by using design techniques which increase the average number of instructions executed per clock cycle period. One such technique for increasing instruction throughput is "pipelining". Pipelining techniques segment each instruction flowing through the microprocessor into several portions, each of which can be handled by a separate stage in the pipeline. Pipelining increases the speed of a microprocessor by overlapping multiple instructions in execution. For example, if each instruction could be executed in six stages, and each stage required one clock cycle to perform its function, six separate instructions could be simultaneously executed (each executing in a separate stage of the pipeline) such that one instruction was completed on each clock cycle. In this ideal scenario, the pipelined architecture would have an instruction throughput which was six times greater than the non-pipelined architecture, which could complete one instruction every six clock cycles.

A second technique for increasing the speed of a microprocessor is by designing it to be a "superscalar." In a superscalar architecture, more than one instruction is issued per clock cycle. If no instructions were dependent upon other instructions in the flow, the increase in instruction throughput would be proportional to the degree of scaleability. Thus, if an architecture were superscalar to degree 2 (meaning that two instructions issued upon each clock cycle), then the instruction throughput in the machine would double.

A microprocessor may be both superpipelined (an instruction pipeline with many stages is referred to as "superpipelined") and superscalar to achieve a high instruction throughput. However, the operation of such a system in practice is far from the ideal situation where each instruction can be neatly executed in a given number of pipe stages and where the execution of instructions is not interdependent. In actual operation, instructions have varying resource requirements, thus creating interruptions in the flow of instructions through the pipeline. Further, the instructions typically have interdependencies; for example, an instruction which reads the value of a register is dependent on a previous instruction which writes the value to that same register - the second instruction cannot execute until the first instruction has completed its write to the register.

Consequently, while superpipelining and superscalar techniques can increase the throughput of a microprocessor, the instruction throughput is highly dependent upon the implementation of the superpipelined, superscalar architecture. One particular problem is controlling the flow of instructions in the pipeline increase the instruction throughput without increasing the frequency of the microprocessor. The efficiency of a superpipelined, superscalar machine is diminished as dependencies, or other factors, cause various stages to be inactive during operation of the microprocessor.

Therefore, a need has arisen for a microprocessor architecture with efficient control of the flow of instructions therein.

PCT Application Publication WO-A-93 20505 discloses instruction scheduling including a register renaming circuit, although conventional register renaming is not used in that register addresses are not renamed. The register renaming circuit operates in conjunction with separate integer, floating point, and Boolean register files, although dependencies cannot occur across register files. At least one register file includes registers that are 32-bits (word) in length - if an instruction referencing that register file outputs a 64-bit (longword) value, the renaming circuit allocates two separate 32-bit registers. A data dependence check circuit determines data dependencies between instructions. If a dependency is detected, tag assignment logic generates one or more tags to specify, an address in a temporary buffer at which the out of order results have been temporarily stored. If the dependency detection indicates a first instruction is dependent on a previous instruction, a tag is output instead of a register address for the operand of the first instruction. The tag represents an address of the operand in the temporary, buffer. The locations in the temporary buffers of the instruction's inputs are determined and these addresses are sent to register file read ports of the register for storing execution results.

US Patent US-A-4 752 873 discloses a data processor having a greater number of physical registers than logical registers. Register allocation circuitry converts a logical register designated by an instruction to a physical register, and includes register renaming circuitry that allocates different physical registers to instructions that write to the same logical registers, thereby resolving read-after-write conflicts.

US Patent US-A-4 992 938 discloses a coprocessor (floating point unit) including register renaming circuitry that renames floating point logical registers addressed by both a CPU for loads/stores and the coprocessor. Register renaming for the floating point logical registers is effected using a map table.

European Patent Application Publication No EP-A-0 514 763 discloses a microprocessor according to the pre-characterising part of claim 1 hereof and a method according to the pre-characterising part of claim 8 hereof. WO-A-9320505 also discloses earlier prior art including:

- a "register renaming" technique for removing storage conflicts (data hazards) - by providing additional registers, wherein the processor allocates a new register for every instruction that writes a register, and a technique for reducing dependencies (data hazards) in which a single bit (scoreboard bit) is associated with each register to indicate whether or not said register has a pending update.

According to a first aspect of the invention there is provided a microprocessor including a register renaming apparatus, the microprocessor having at least one instruction pipeline with a plurality of stages for processing a stream of instructions, and having a plurality of logical registers, the stream of instructions including write instructions that when processed addressably write to a logical register, the microprocessor comprising:

a plurality of physical registers exceeding in number the plurality of logical registers; and register translation circuitry coupled to said at least one instruction pipeline and to said physical registers, said register translation circuitry being operable to allocate, for each write instruction processed, a physical register to said logical register;

characterised in that:

said write instructions include write instructions that when processed addressably write to a logical register which has multiple addressable portions; and when a current write instruction and a previous write instruction addressably write to the same multiple addressable portions logical register, said register translation circuitry performs a comparison of which portion of said logical register for said current write instruction is addressed with an indication identifying which portion of said same logical register for said previous write instruction was addressed, and selectively allocates a new physical register or stalls the current write instruction based on the result of said comparison.

According to a second aspect of the invention there is provided a method of allocating registers in a microprocessor having at least one instruction pipeline with a plurality of stages for processing a stream of instructions, and having a plurality of logical registers, the stream of instructions including write instructions that when processed addressably write to a logical register, the method comprising:

allocating, for each of said write instructions processed, one of a plurality of physical registers to said logical register wherein said plurality of physical registers exceed in number the plurality of logical registers; and the method being characterised in that: said write instructions include write instructions that when processed addressably write to a logical register which has multiple addressable portions; and when a current write instruction and previous write instruction addressably write to the same multiple addressable portions logical register, a comparison is performed of which portion of said logical register for said current write instruction is addressed with an indication identifying which portion of said logical register for said previous write instruction was addressed, and a new physical register is selectively allocated or the current write instruction is stalled based on the result of said comparison.

A superscalar, pipelined processor embodying the invention is described indetail below. The processor includes a plurality of instruction pipelines, each having a plurality of stages in which instructions issued into a pipeline are processed. Various salient features of such processor are set out at (A) to (J) below.

(A) The processor simultaneously issues instructions into multiple pipelines without regard to data dependencies between such issued instructions. Pipe control means detects dependencies between instructions in the pipelines, and controls the flow of instructions through the stages of the pipelines such that a first instruction in a current stage of one pipeline is not delayed due to a data dependency on a second instruction in another pipeline unless the data dependency must be resolved for proper processing of the first instruction in such current stage.
(B) Pipe control means controls instruction flow in the pipelines such that, for a given stage, a junior instruction cannot modify the processor state before a senior instruction until after the senior instruction can no longer cause an exception.
(C) Pipe switching means allows selective switching of instructions between the pipelines, ordering instructions in the pipeline in a sequence to reduce dependencies between instructions.
(D) At least two of the pipelines include an execution stage, and a microcontroller means provides independent microinstruction flows to each execution stage, selectively controlling each microinstruction flow such that, for selective instructions, the execution stages are independently controlled to process a single instruction.

(E) The pipe control means monitors state information for each stage and controls the flow of instructions between stages responsive to the state information, such that an instruction in a pipeline can advance from one stage to another independent of the instruction flow in other pipelines.

(F) The pipe control means eliminates a dependency between first and second instructions by altering the operand source for one of the instructions.

(G) Register translation means maintains processor state information defining a set of physical registers that have been most recently allocated to each of the logical registers in response to writes to those logical registers. When instructions are issued into a pipeline prior to determining whether such instructions will cause an exception, at each stage of the pipeline, the state information for the instruction at that stage is checkpointed such that, if an instruction causes an exception, the corresponding checkpointed state information is retrieved to restore the processor state to the point of issuing that instruction. In addition, if a branch or floating point instruction is issued into a pipeline, and subsequent instructions are then speculatively issued behind such branch or floating point instruction, the state information for such branch or floating point instruction is checkpointed such that, if the branch is mispredicted or the floating point instruction faults, the corresponding checkpointed state information is retrieved to restore the processor state to the point of issuing the branch or floating point instruction.

(H) The defined set of logical registers have multiple addressable sizes as sources and destinations of operands for instructions. The register translation means allocates physical registers to one of said defined set of logical registers responsive to an instruction for writing to said one of said logical registers and the size associated with the logical register.

(I) The register translation means stores, for each physical register, a current indication and logical ID code indicating whether the physical register contains the current value for the logical register identified by such logical ID code. For each access to a logical register, the corresponding logical ID code is compared with each logical ID code stored with a physical register, and a corresponding physical ID code is output for the physical register containing the current value of the associated logical register. In addition, the register translation unit is capable of storing, for each physical register, status information whether a data dependency exists for an associated logical register.

(J) At least one of the execution pipelines includes an execution unit that is controlled by a microcontroller means. For selected instructions, the register translation means is also controlled by the microcontroller means.

Embodiments of the present invention may be implemented to realize one or more of the following technical advantages. Instructions are issued without regard to dependencies between them so that bubbles are not introduced into the pipeline unnecessarily, since dependencies may resolve themselves without stalling, either through normal instruction flow, or through mechanisms in the pipeline to resolve dependencies. Instructions may complete out of order after they can no longer fault, which is particularly advantageous with multi-box instructions which may take many clock cycles to complete and would otherwise significantly stall the flow of instructions. Dependencies may be reduced by switching instructions between the pipelines. Two execution units in separate pipelines can be separately controlled to process a single instruction, using two separate microinstruction flows, without significantly increasing complexity of the execution stages or the microsequencer. Instructions can proceed independently through respective execution pipelines, allowing bubbles caused by dependencies to be removed during the processing of instructions -- in particular, read-after-write dependencies may be eliminated without recompiling the source code to alter the order of instructions. All of these features and advantages serve to maximize pipeline execution performance.

Other areas where embodiments of the present invention may be implemented to provide technical advantages are as follows. By maintaining the status of pending writes to each of the physical registers, the control for allocating registers and providing status information is also simplified. Checkpointing state information relating to the physical registers allows the microprocessor to restore the processor state after instructions that cause exceptions, mispredicted branches, floating point errors, or other instruction errors, within a single clock cycle, thereby greatly reducing the penalty on recovery from such an error. Register renaming is supported for multiple-sized logical registers to provide elimination of certain data dependencies while maintaining compatibility with existing instruction sets using multiple-sized registers. A physical register can be quickly identified responsive to a request for a logical register, using a minimum of hardware. Maintaining status information associated with the physical registers allows data dependencies to be readily detected. The register translation unit used in implementing these features and advantages can be, for selected instructions, controlled directly by a microcontroller controlling the execution unit(s) that process such instructions (rather than by the normal method of using hardware control signals).

## Brief Description of the Drawings

For a more complete understanding of the present invention, and the advantages thereof, reference is now made to the following descriptions taken in conjunction with the accompanying drawings, in which:

Figure 1a illustrates a block diagram of a superscalar, superpipelined microprocessor;

Figure 1b illustrates the seven pipeline stages of the microprocessor, including X and Y execution pipes;

Figure 2 is a block diagram of an exemplary computer system;

Figure 3 illustrates a timing diagram showing the flow of instructions through the pipeline unit;

Figure 4 illustrates a block diagram of the control mechanism for controlling the flow of instructions through the pipeline unit;

Figure 5 illustrates a flow diagram illustrating out-of-order completion of instructions;

Figures 6a-b and 7 illustrate a flow of instruction through the pipeline using pipe switching;

Figure 8 illustrates a flow diagram describing the method of pipe switching;

Figure 9 illustrates a functional block diagram of the register translation unit;

Figure 10 illustrates the control registers used in the register translation unit;

Figure 11 illustrates circuitry for generating bits for the Register Busy register;

Figure 12a illustrates a representation of a variable size extended register under the X86 architecture;

Figure 12b illustrates a flow chart for allocating logical registers with variable sizes;

Figure 13 illustrates circuitry for selectable control of the register translation unit;

Figures 14a-b illustrate the portions of the register translation unit for performing translation and hazard detection;

Figures 15a-b illustrate operand forwarding;

Figures 16a-b illustrate result forwarding;

Figures 17a-b illustrate the detection of forwarding situations;

Figure 18 is a block diagram of the forwarding circuitry; and

Figures 19a-b illustrate pipe control for multi-box instructions.

## Detailed Description of the Preferred Embodiments

The detailed description of an exemplary embodiment of the microprocessor of the present invention is organized as follows:

1. Exemplary Processor System

    1.1. Microprocessor
    1.2. System

2. Generalized Pipeline Flow
3. Pipeline Control

3.1. Generalized Stall Control
3.2. Pipe Switching
3.3. Multi-box Instructions
3.4. Exclusive Instructions

4. In order Passing\Out-of-Order Completion of Instructions
5. Pipe Switching
6. Issuing Instructions Without Regard to Dependencies
7. Multi-threaded EX Operation
8. Register Translation Unit

8.1. Register Translation Overview
8.2. Translation Control Registers
8.3. Register Allocation
8.4. Instructions With Two Destinations
8.5. Checkpointing Registers for Speculative Branch Execution
8.6. Recovery from Exceptions
8.7. Microcontrol of the Register Translation Unit
8.8. Register ID Translation and Hazard Detection

9. Forwarding
10. Conclusion

This organizational table and the corresponding headings used in this detailed description, are provided for the convenience of reference only. Detailed description of conventional or known aspects of the microprocessor are omitted as to not obscure the description of the invention with unnecessary detail.

## 1. Exemplary Processor System

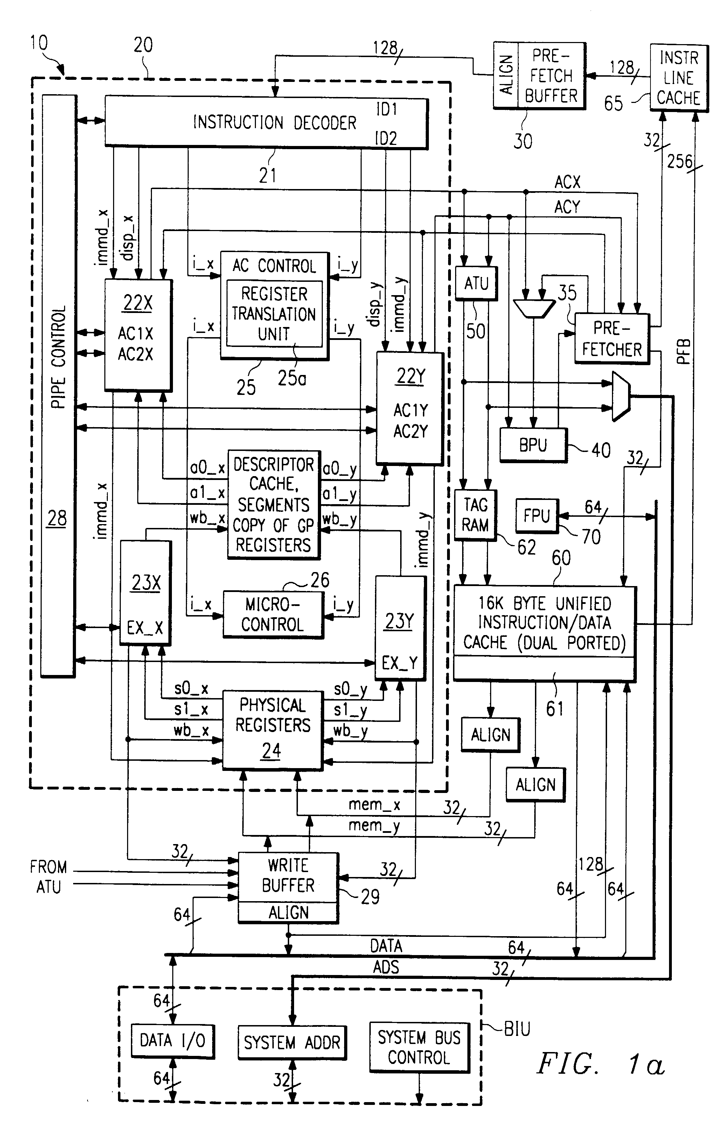

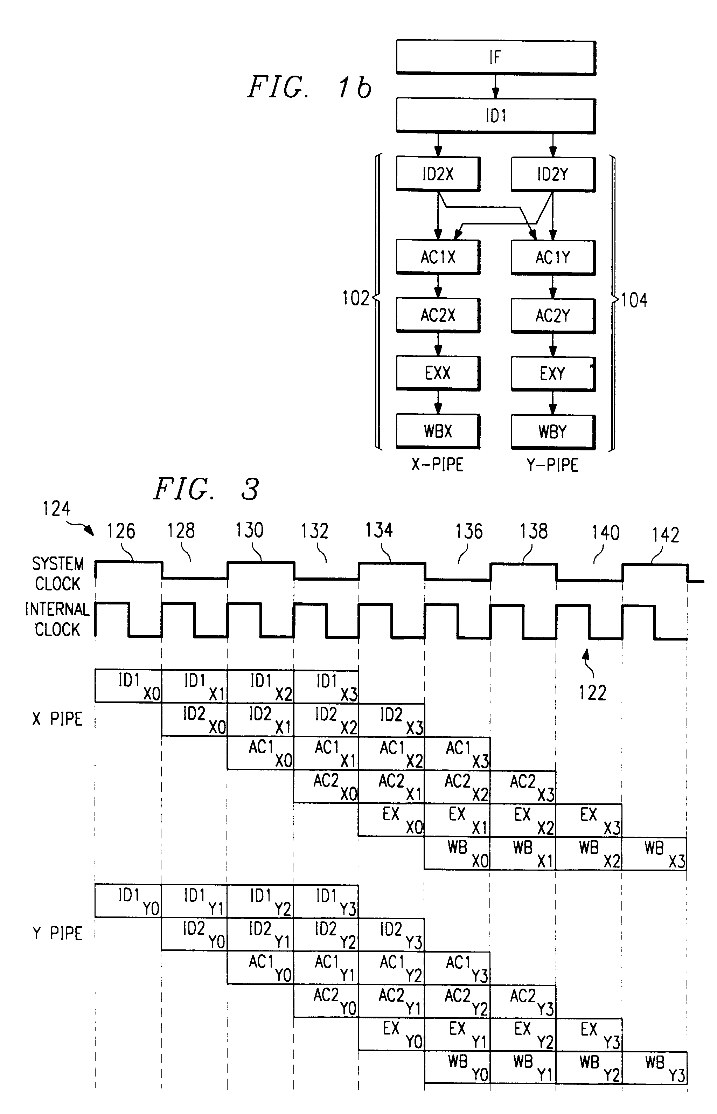

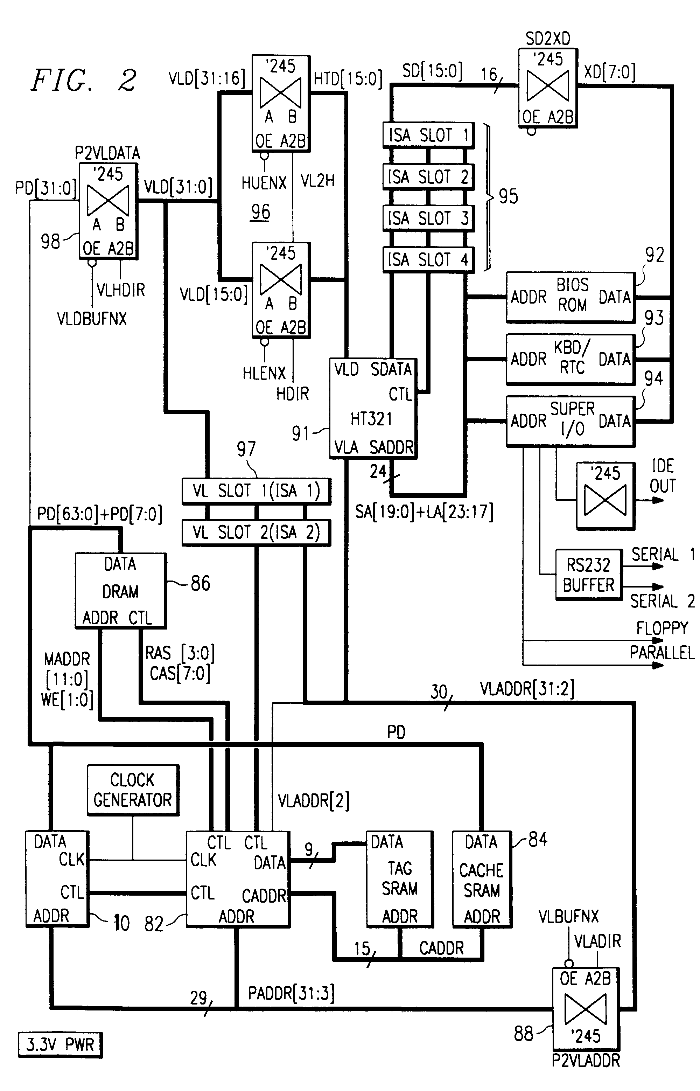

The exemplary processor system is shown in Figures 1a and 1b, and Figure 2. Figures 1a and 1b respectively illustrate the basic functional blocks of the exemplary superscalar, superpipelined microprocessor along with the pipe stages of the two execution pipelines. Figure 2 illustrates an exemplary processor system (motherboard) design using the microprocessor.

### 1.1. Microprocessor

Referring to Figure 1a, the major sub-blocks of a microprocessor 10 include: (a) CPU core 20, (b) prefetch buffer 30 , (c) prefetcher 35, (d) BPU (branch processing unit) 40, (e) ATU (address translation unit) 50, and (f) unified 16 Kbyte code/data cache 60, including TAG RAM 62. A 256 byte instruction line cache 65 provides a primary instruction cache to reduce instruction fetches to the unified cache, which operates as a secondary instruction cache. An onboard floating point unit (FPU) 70 executes floating point instructions issued to it by the CPU core 20.

The microprocessor uses internal 32-bit address and 64-bit data buses ADS and DBS. A 256 bit (32 byte) prefetch bus PFB, corresponding to the 32 byte line size of the unified cache 60 and the instruction line cache 65, allows a full line of 32 instruction bytes to be transferred to the instruction line cache in a single clock. Interface to external 32 bit address and 64 bit data buses is through a bus interface unit BIU.

The CPU core 20 is a superscalar design with two execution pipes X and Y. It incudes an instruction decoder 21, address calculation units 22X and 22Y, execution units 23X and 23Y, and a register file 24 with 32 32-bit registers. An AC control unit 25 includes a register translation unit 25a with a register scoreboard and register renaming hardware. A microcontrol unit 26, including a microsequencer and microROM, provides execution control.

Writes from CPU core 20 are queued into twelve 32 bit write buffers 27 -- write buffer allocation is performed by the AC control unit 25. These write buffers provide an interface for writes to the unified cache -- non-cacheable writes go directly from the write buffers to external memory. The write buffer logic supports optional read sourcing and write gathering.

A pipe control unit 28 controls instruction flow through the execution pipes, including keeping the instructions in order until it is determined that an instruction will not cause an exception, squashing bubbles in the instruction stream, and flushing the execution pipes behind branches that are mispredicted and instructions that cause an exceptions. For each stage, the pipe control unit keeps track of which execution pipe contains the earliest instruction, and provides a stall output and receives a delay input.

BPU 40 predicts the direction of branches (taken or not taken), and provides target addresses for predicted taken branches and unconditional change of flow instructions (jumps, calls, returns). In addition, it monitors speculative execution in the case of branches and floating point instructions, i.e., the execution of instructions speculatively issued after branches which may turn out to be mispredicted, and floating point instructions issued to the FPU which may fault after the speculatively issued instructions have completed execution. If a floating point instruction faults, or if a branch is mispredicted (which will not be known until the EX or WB stage for the branch), then the execution pipeline must be repaired to the point of the faulting or mispredicted instruction (i.e., the execution pipeline is flushed behind that instruction), and instruction fetch restarted.

Pipeline repair is accomplished by creating checkpoints of the processor state at each pipe stage as a floating point or predicted branch instruction enters that stage. For these checkpointed instructions, all resources (programmer visible registers, instruction pointer, condition code register) that can be modified by succeeding speculatively issued instructions are checkpointed. If a checkpointed floating point instruction faults or a checkpointed branch is mispredicted, the execution pipeline is flushed behind the checkpointed instruction -- for floating point instructions, this will typically mean flushing the entire execution pipeline, while for a mispredicted branch there may be a paired instruction in EX and two instructions in WB that would be allowed to complete.

For the exemplary microprocessor 10, the principle constraints on the degree of speculation are: (a) speculative execution is allowed for only up to four floating point or branch instructions at a time (i.e., the speculation level is maximum 4), and (b) a write or floating point store will not complete to the cache or external memory until the associated branch or floating point instruction has been resolved (i.e., the prediction is correct, or floating point instruction does not fault).

The unified cache 60 is 4-way set associative (with a 4k set size), using a pseudo-LRU replacement algorithm, with write-through and write-back modes. It is dual ported (through banking) to permit two memory accesses (data read, instruction fetch, or data write) per clock. The instruction line cache is a fully associative, lookaside implementation (relative to the unified cache), using an LRU replacement algorithm.

The FPU 70 includes a load/store stage with 4-deep load and store queues, a conversion stage (32-bit to 80-bit extended format), and an execution stage. Loads are controlled by the CPU core 20, and cacheable stores are directed through the write buffers 29 (i.e., a write buffer is allocated for each floating point store operation).Referring to Figure 1b, the microprocessor has seven-stage X and Y execution pipelines: instruction fetch IF, two instruction decode stages ID1 and ID2, two address calculation stages AC1 and AC2, execution EX, and write-back WB. Note that the complex instruction decode ID and address calculation AC pipe stages are superpipelined.

The IF stage provides a continuous code stream into the CPU core 20. The prefetcher 35 fetches 16 bytes of instruction data into the prefetch buffer 30 from either the (primary) instruction line cache 65 or the (secondary) unified cache 60. BPU 40 is accessed with the prefetch address, and supplies target addresses to the prefetcher for predicted changes of flow, allowing the prefetcher to shift to a new code stream in one clock.

The decode stages ID1 and ID2 decode the variable length X86 instruction set. The instruction decoder 21 retrieves 16 bytes of instruction data from the prefetch buffer 30 each clock. In ID1, the length of two instructions is decoded (one each for the X and Y execution pipes) to obtain the X and Y instruction pointers -- a corresponding X and Y bytes-used signal is sent back to the prefetch buffer (which then increments for the next 16 byte transfer). Also in ID1, certain instruction types are determined, such as changes of flow, and immediate and/or displacement operands are separated. The ID2 stage completes decoding the X and Y instructions, generating entry points for the microROM and decoding addressing modes and register fields.

During the ID stages, the optimum pipe for executing an instruction is determined, and the instruction is issued into that pipe. Pipe switching allows instructions to be switched from ID2x to AC1y, and from ID2y to AC1x. For the exemplary embodiment, certain instructions are issued only into the X pipeline: change of flow instructions, floating point instructions, and exclusive instructions. Exclusive instructions include: any instruction that may fault in the EX pipe stage and certain types of instructions such as protected mode segment loads, string instructions, special register access (control, debug, test), Multiply/Divide, Input/Output, PUSHA/POPA (PUSH all/ POP all), and task switch. Exclusive instructions are able to use the resources of both pipes because they are issued alone from the ID stage (i.e., they are not paired with any other instruction). Except for these issue constraints, any instructions can be paired and issued into either the X or Y pipe.

The address calculation stages AC1 and AC2 calculate addresses for memory references and supply memory operands. The AC1 stage calculates two 32 bit linear (three operand) addresses per clock (four operand addresses, which are relatively infrequent, take two clocks). During this pipe stage, data dependencies are also checked and resolved using the register translation unit 25a (register scoreboard and register renaming hardware) -- the 32 physical registers 24 are used to map the 8 general purpose programmer visible logical registers defined in the X86 architecture (EAX, EBX, ECX, EDX, EDI, ESI, EBP, ESP). During the AC2 stage, the register file 26 and the unified cache 70 are accessed with the physical address (for cache hits, cache access time for the dual ported unified cache is the same as that of a register, effectively extending the register set) -- the physical address is either the linear address, or if address translation is enabled, a translated address generated by the TLB 60.

The AC unit includes 8 architectural (logical) registers (representing the X86 defined register set) that are used by the AC unit to avoid the delay required to access in AC1 the register translation unit before accessing register operands for address calculation. For instructions that require address calculations, AC1 waits until the required data in the architectural registers is valid (no read after write dependencies) before accessing those registers. During the AC2 stage, source operands are obtained by accessing the register file 26 and the unified cache 60 with the physical address (for cache hits, cache access time for the dual ported unified cache is the same as that of a register, effectively extending the register set) -- the physical address is either the linear address, or if address translation is enabled, a translated address generated by the ATU 50.

Translated addresses are generated by the ATU (using a TLB or translation lookaside buffer) from the linear address using information from page tables in memory and workspace control registers on chip. The unified cache is virtually indexed and physically tagged to permit, when address translation is enabled, set selection with the untranslated address (available at the end of AC1) and, for each set, tag comparison with the translated address from the ATU (available early in AC2). Checks for any segmentation and/or address translation violations are also performed in AC2.

Instructions are kept in program order until it is determined that they will not cause an exception. For most instructions, this determination is made during or before AC2 -- floating point instructions and certain exclusive instructions may cause exceptions during execution. Instructions are passed in order from AC2 to EX (or in the case of floating point instructions, to the FPU) -- because integer instructions that may still cause an exception in EX are designated exclusive, and therefore are issued alone into both execution pipes, handling exceptions in order is ensured.

The execution stages EXx and EXy perform the operations defined by the instruction. Instructions spend a variable number of clocks in EX, i.e., they are allowed to execute out of order (out of order completion). Both EX stages include adder, logical, and shifter functional units, and in addition, the EXx stage contains multiply/divide hardware.

The write back stage WB updates the register file 24, condition codes, and other parts of the machine state with the results of the previously executed instruction. The register file is written in PH1 (phase 1) of WB, and read in PH2 (phase 2) of AC2.

Additional disclosure on the write buffer 27, speculative execution and the microsequencer may be found in our European Patent Applications having the Publication Nos. EP-A-0 649 083, EP-A-0 649 084, EP-A-0 649 086 and EP-A-0 651 331, all of which were filed concurrently with the present application.

## 1.2 System

Referring to Figure 2, for the exemplary embodiment, microprocessor 10 is used in a processor system that includes a single chip memory and bus controller 82. The memory/bus controller 82 provides the interface between the microprocessor and the external memory subsystem --level two cache 84 and main memory 86 -- controlling data movement over the 64 bit processor data bus PD (the data path is external to the controller which reduces its pin count and cost.)

Controller 82 interfaces directly to the 32-bit address bus PADDR, and includes a one bit wide data port (not shown) for reading and writing registers within the controller. A bidirectional isolation buffer 88 provides an address interface between microprocessor 10 and VL and ISA buses.

Controller 82 provides control for the VL and ISA bus interface. A VL/ISA interface chip 91 (such as an HT321) provides standard interfaces to a 32 bit VL bus and a 16 bit ISA bus. The ISA bus interfaces to BIOS 92, keyboard controller 93, and I/O chip 94, as well as standard ISA slots 95. The interface chip 91 interfaces to the 32 bit VL bus through a bidirectional 32/16 multiplexer 96 formed by dual high/low word [31:16]/[15:0] isolation buffers. The VL bus interfaces to standard VL slots 97, and through a bidirectional isolation buffer 98 to the low double word [31:0] of the 64 bit processor data bus PD.

## 2. Generalized Pipeline Flow

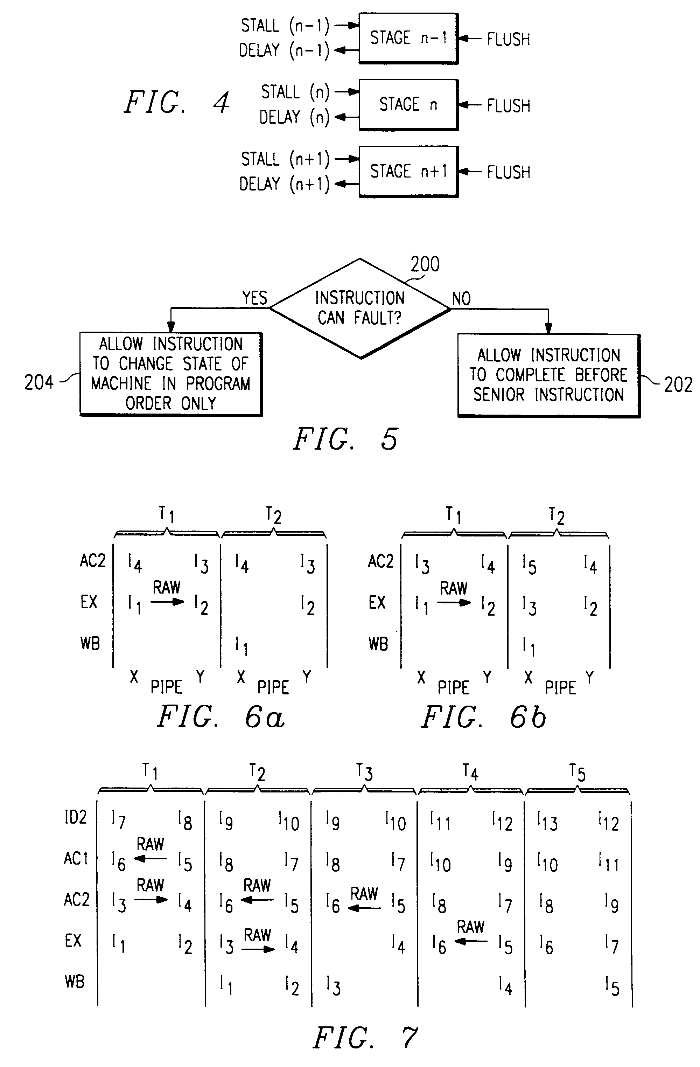

Figure 3 illustrates the flow of eight instructions through the pipeline, showing the overlapping execution of the instructions, for a two pipeline architecture. Additional pipelines and additional stages for each pipeline could also be provided. In the preferred embodiment, the microprocessor 10 uses an internal clock 122 which is a multiple of the system clock 124. In Figure 3, the internal clock is shown as operating at two times the frequency of the system clock.

During the first internal clock cycle 126, the ID1 stage operates on respective instructions X0 and Y0. During internal clock cycle 128, instructions X0 and Y0 are in the ID2 stage (X0 being in ID2x and Y0 being in ID2y) and instructions X1 and Y1 are in the ID1 stage. During internal clock cycle 130, instructions X2 and Y2 are in the ID1 stage, instructions X1 and Y1 are in the ID2 stage (X1 being in ID2x and Y1 being in ID2y) and instructions X0 and Y0 are in the AC1 stage (X0 being in AC1x and Y0 being in AC1y). During internal clock cycle 132, instructions X3 and Y3 are in the ID1 stage, instructions X2 and Y2 are in the ID2 stage, instructions X1 and Y1 are in the AC1 stage and instructions X0 and Y0 are in the AC2 stage. The instructions continue to flow sequentially through the stages of the X and Y pipelines.

As shown in clocks 134-140, the execution portion of each instruction is performed on sequential clock cycles. This is a major advantage of a pipelined architecture - the number of instructions completed per clock is increased, without reducing the execution time of an individual instruction. Consequently a greater instruction throughput is achieved without requiring greater demands on the speed of the hardware.

The instruction flow shown in Figure 3 is the optimum case. As shown, no stage requires more than one clock cycle. In an actual machine, however, one or more stages may require additional clock cycles to complete thereby changing the flow of instructions through the other pipe stages. Furthermore, the flow of instructions through one pipeline may be dependent upon the flow of instructions through the other pipeline.

A number of factors may cause delays in various stages of one or all of the pipelines. For example, an access to memory may miss in the memory cache, thereby preventing access of the data in the time required to process the instruction in one clock. This would require that either, or both, sides of the EX stage to delay until the data was retrieved from main memory. An instruction may require a hardware resource, such as a multiplier, which is only in one of the execution stages (in EXX in the X execution pipe) in the illustrated embodiment. In this case, the instruction must delay until the resource is available. Data dependencies can also cause delays. If an instruction needs the result from a previous instruction, such as an ADD, it must wait until that instruction is processed by the execution unit.

Other delays are caused by "multi-box" instructions; i.e., instructions which are implemented using multiple microinstructions, and therefore require more than one clock cycle in the EX pipe stage to complete. These instructions stop the flow of subsequent instructions through the pipeline at the output of the ID2 stage.

The flow of instructions through the pipeline is controlled by the pipe control unit 28. In the preferred embodiment, a single pipe control unit 28 is used to control the flow of instructions through both (or all) of the pipes. To control the flow of instructions through the pipes, the pipe control unit 28 receives "delay" signals from the various units comprising the pipelines 102 and 104, and issues "stall" signals to the various units.

Although a single pipe control unit 28 is used for both X and Y pipelines, the pipelines themselves are controlled independent of one another. In other words, a stall in the X pipeline does not necessarily cause a stall in the Y pipeline.

## 3. Pipeline Control

Figure 4 illustrates the inter-stage communication between pipeline stages. The stages are arbitrarily designated as stage N-1, stage N, and stage N + 1. Each stage has a unique input STALL from the pipe control unit (pipe controller) 28 and an output DELAY. The DELAY output is enabled if the stage needs at least one more clock to complete the instruction it contains. For each pipeline, the pipe control unit 28 determines whether a stage of a pipe is "done" based on the DELAY signal. A stage is "done" if it is ready to pass its instruction to a succeeding stage. The STALL input to a stage is enabled by the pipe control unit 28 if the stage cannot transfer an instruction to the succeeding pipe stage, because that succeeding stage is delayed or stalled. In the preferred embodiment, a pipeline stage is stalled only if it is not delayed (i.e., the DELAY signal is false).

A "valid" pipe stage is one containing an instruction, either in progress or complete. An invalid pipe stage does not contain an instruction. An invalid pipe stage is said to contain a "bubble". "Bubbles" are created at the front end of the pipeline 100 when the ID1 and ID2 stages cannot decode enough instructions to fill empty AC1 and AC2 stages 112 and 114. Bubbles can also be created when a pipe stage transfers its instruction to the succeeding stage, and the prior stage is delayed. While the pipe stages do not input or output bits indicating the validity of the stages, bubbles in the stages are tracked by the pipeline control unit 28.

In some cases, a bubble in a pipe stage may be overwritten by an instruction from the preceding stage, referred to as a "slip." Pipe stages may also be "flushed", if they contain an instruction which should not complete due to an exception condition in a succeeding pipe stage. The signal FLUSH is an input to each pipe stage. A pipe stage generates an "exception" if its instruction cannot complete due to an error condition and should not transfer beyond the current stage. Exceptions can occur in the IF stage 106, the ID1 and ID2 stages, and the AC1 and AC2 stages for all instructions. Certain instructions, designated as "exclusive" instructions may have exceptions occur in the execution stage 116. Furthermore, exceptions can occur for floating point instructions.

### 3.1. Generalized Stall Control

In the general case, the pipe controller will stall a stage of a pipeline if the stage is valid and it is not delayed and the next stage is either delayed or stalled. This may be described logically for a stage N as:

$$STALL_N = v_N \bullet !d_N \bullet (d_{N+1} + STALL_{N+1})$$

where:

$v_N$ is true if stage N is valid,
$d_N$ is true if DELAY for stage N is true and
! denotes that the succeeding term is negated.

For a six stage pipeline, the description can be expanded as:

$$STALL6 = false$$

$$STALL_5 = v_5 \bullet !d_5 \bullet d_6$$

$$STALL_4 = v_4 \bullet !d_4 \bullet (d_5 + v_5 \bullet !d_5 \bullet d_6)$$

$$STALL_3 = v_3 \bullet !d_3 \bullet (d_4 + v_4 \bullet !d_4 \bullet (d_5 + v_5 \bullet !d_5 \bullet d_6))$$

$$STALL_2 = v_2 \bullet !d_2 \bullet (d_3 + v_3 \bullet !d_3 \bullet (d_4 + v_4 \bullet !d_4 \bullet (d_5 + v_5 \bullet !d_5 \bullet d_6)))$$

$$STALL_1 = v_1 \bullet !d_1 \bullet (d_2 + v_2 \bullet !d_2 \bullet (d_3 + v_3 \bullet !d_3 \bullet (d_4 + v_4 \bullet !d_4 \bullet (d_5 + v_5 \bullet !d_5 \bullet d_6))))$$

When the pipe control unit 28 stalls a stage of a pipeline, it does not necessarily stall the corresponding stage of the other pipeline. Whether the other stage is stalled depends upon the sequence of instructions and other factors, as described below.

### 3.2. Pipe Switching

While the general model above works for an architecture where instructions flow through the pipe they enter, a more complex control structure is necessary when instructions are allowed to switch between pipes as shown in Figure 2. The mechanism for determining whether a switch will occur is described in greater detail hereinbelow.

In the preferred embodiment, the pipe control unit 28 keeps the instructions "in program order" (or "in order") until they are passed from their AC2 stage to the EX stage. "In order" means that a "junior" instruction cannot be at a pipeline stage beyond a "senior" instruction (a junior instruction's position in the sequence of instructions received by the microprocessor is after that of a senior instruction), although a junior instruction may be at the same stage as a senior instruction. Thus, instruction $I_{T+1}$ (the junior instruction) can be in AC1x while instruction $I_T$ (the senior instruction) is in AC1y, but $I_{T+1}$ cannot advance to AC2x until $I_T$ advances to AC2y, although $I_T$ can advance without waiting for $I_{T+1}$ to advance.

Due to the sequential nature of the IF stage and the ID1 stage, instructions will not get out of order within these two stages. The flow of instructions through the ID2, AC1 and AC2 stages, however, necessitates modifications to the general stall mechanism. To aid in controlling instruction flow in this situation, the pipe control unit 28 maintains a control signal XFIRST for each pipe stage. If XFIRST is true for a particular stage, then the instruction in this stage of the X pipeline is senior to the instruction in the corresponding stage of the Y pipeline. In the illustrated embodiment, with two pipelines, XFIRST indicates which pipeline has the senior of the two instructions for a particular stage; for implementations with more than two pipes XFIRST would indicate the relative seniority of each instruction at each stage.

At the output of the ID2 units, the pipe control unit must determine whether an instruction can proceed to either the AC1x or AC1y. A senior instruction can proceed (assuming it is valid and not delayed) if the succeeding stage of either pipeline is not delayed or stalled. A junior instruction can proceed (assuming it is valid and not delayed) only if the senior instruction in the corresponding stage of the other pipeline will not delay or stall. This can be described logically as:

$$st_{3X} = v_{3X} \bullet (d_{3X} + d_{4X} + STALL_{4X})$$

$$st_{3Y} = v_{3Y} \bullet (d_{3Y} + d_{4Y} + STALL_{4Y})$$

where $st_3$ specifies whether the corresponding pipeline will stall or delay at or below the ID2 stage.

$$STALL_{3X} = v_{3X} \bullet !d_{3X} \bullet (d_{4X} + STALL_{4X}) + !XFIRST_3 \bullet st_{3Y}$$

$$STALL_{3Y} = v_{3Y} \bullet !d_{3Y} \bullet (d_{4Y} + STALL_{4Y}) + XFIRST_3 \bullet st_{3X}$$

### 3.3. Multi-box Instructions

The EX stage of each pipeline is controlled independently of the other EX stage by microinstructions from the microROM. While many instructions are implemented by a single microinstruction, and hence pass through the EX stage in a single clock cycle, some instructions require multiple microinstructions for their execution and hence require more than one clock cycle to complete. These instructions are referred to as "multi-box" instructions.

Because the microROM cannot be accessed by another instruction in the same pipeline during execution of a multi-box instruction, a new instruction cannot be passed from the ID2 stage of a pipe to an AC1 stage of a pipe until after the last microROM access for the multi-box instruction. This is due to the microROM being accessed during AC1. As the multi-box instruction reads its last microinstruction, the following instruction is allowed to access the microROM and enter AC1, so that no bubbles are produced.

When the ID2 stage of a pipeline receives an instruction from the ID1 stage, it decodes whether an instruction is multi-box. The pipe control unit 28 will stall the ID2 stage until the multi-box instruction is finished with the microROM. The EX stage will signal the end of a multi-box instruction via a UDONE signal. The control necessary to support multi-box instructions may be described as:

$$st_{3X} = !d_{3X} \bullet v_{3X} \bullet (d_{4X} + STALL_{4X} + MULTIBOX_{4X} \bullet !UDONE_{4X})$$

$$st_{3Y} = !d_{3Y} \bullet v_{3Y} \bullet (d_{4Y} + STALL_{4Y} + MULTIBOX_{4Y} \bullet !UDONE_{4Y})$$

$$STALL_{3X} = st_{3X} + !XFIRST_3 \bullet st_{3Y}$$

$$STALL_{3Y} = st_{3Y} + !XFIRST_3 \bullet st_{3X}$$

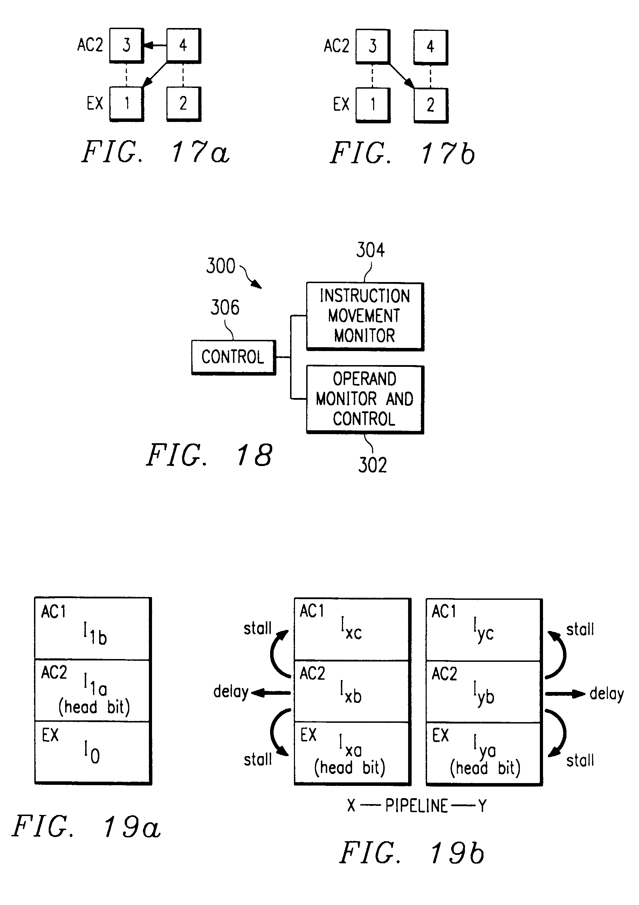

A multi-box instruction can use the resources of AC1, AC2, and EX. Additional pipe control relating to multi-box instructions is discussed in connection with Figures 19a-b. In Figure 19a, $I_0$ is in the EX stage of the X pipeline and $I_1$, a multi-box instruction, is in the AC2 ($I_{1a}$) and AC1 ($I_{1b}$)stages. From the viewpoint of the pipe control unit, the multi-box instruction $I_1$ is treated as a single instruction, and a delay in any stage occupied by the multi-box instruction will cause all stages associated with the multi-box instruction to stall. Thus, a delay in $I_{1b}$ will cause $I_{1a}$ to stall, even though $I_{1a}$ is in front of $I_{1b}$ in the pipeline. This is the only situation in which a delay in one stage will result in a stall in a succeeding stage.

The pipe control unit 28 keeps track of the boundaries between instructions through the use of a head bit associated with each microinstruction. The head bit indicates whether the microinstruction is the first microinstruction of an instruction, even if the instruction is a one-box instruction. If the head bit is not true for a given microinstruction, then it is not the first microinstruction. By checking the head bit for each microinstruction in a pipeline, the pipe control unit can determine boundaries between instructions and stall the stages accordingly.

### 3.4. Exclusive Instructions

Another type of instruction used in the preferred embodiment is an "exclusive" instruction. Any instruction which has the possibility of causing an exception while executing in the EX stage is labeled as exclusive. Exceptions are discussed in greater detail below. An instruction requiring multiple memory accesses is labeled exclusive because it may cause an exception during such an access. Other instructions are labeled as exclusive because they modify control registers, memory management registers or use a resource such as a multiply hardware only available in one execution pipe. Exclusive instructions may be either single-box or multi-box. Exclusive instructions must be executed alone (i.e., no other instruction is used in the corresponding stage of the other pipe), due to the exclusive instruction's effect on the state of the machine or because the instruction can benefit from the use of both EX units. Examples of exclusive instructions that may cause an exception in the EX stage are DIV (divide), which may cause a divide by zero error, and instructions which must perform memory access during the EX stage like PUSHA. Other examples of exclusive instructions from the 486 instruction set are: ARPL, BOUND, CALL, CLC, CLD, CLI, CLTS, CMC, CMPS, DIV, ENTER, HLT, IDIV, IMUL, IN, INS, INT, INTO, INVD, INVLPG, IRET, LAHF, LAR, LEAVE, LGDT, LIDT, LGS (PM), LSS (PM), LDS (PM), LES (PM), LFS(PM), LLDT, LMSW, LODS, LSL, LTR, MOV (SR), MOVS, MUL, OUT, OUTS, POPA, POPF, POP MEM, PUSHA, PUSHF, PUSH MEM, RET, SAHF, SCAS, SGDT, SIDT, SLDT, SMSW, STC, STD, STI, STOS, STR, VERR, VERW, WAIT, and WBINVD, where "PM" denotes a protected mode instruction and "SR" denotes an instruction using special or control registers.

The ID1 stage decodes which instructions are exclusive. The pipe control unit 28 stalls exclusive instructions at the ID2 stage until both AC1x and AC1y stages are available.

Figure 19b illustrates the effect of a delay of an exclusive multi-box instruction. An exclusive multi-box instruction occupies the EX, AC2 and AC1 stages for both the X and Y pipelines. If any of the stages occupied by the exclusive multi-box instruction delays, the corresponding stage of the opposite pipeline will also delay, and the other stages associated with the multi-box instruction will be stalled by the pipe control unit in order to keep the multi-box instruction together. Hence, if instruction $I_{xb}$ delays, then $I_{yb}$ delays and $I_{xa}$, $I_{ya}$, $I_{xc}$ and $I_{yc}$ are stalled. With an exclusive multi-box instruction, two head bits, one for each pipeline, are used to denote the beginning of the instruction.

## 4. In order Passing\Out-of-Order Completion of Instructions

Referring to Figures 1a and 1b, as described above, instructions are maintained in order by the pipe control unit 28, until they pass from the AC2 stage to the EX stage. An instruction is considered "passed" to the EX stage once execution begins on the instruction, since some preliminary procedures relating to advancement to the next stage, such as changing pointers to the instruction, may be done before all exceptions are reported.

Once an instruction passes from an AC2 stage to an EX stage, it can complete its execution out-of-order (i.e., the junior instruction can continue on to the write back stage before the senior instruction), unless there is a resource or a data dependency which prevents the instruction from executing out-of-order. For example, a read-after-write (RAW) dependency would prevent an instruction from completing its EX stage until the dependency is cleared. Thus, an instruction such as ADD AX,BX cannot complete its EX stage until execution of a previous ADD BX,CX is completed, since the value of operand BX is dependent upon the previous instruction.

However, junior instructions which pass to the EX stage without dependencies on a senior instruction may complete, and it is therefore possible for many instructions to pass a senior instruction which requires multiple clock periods in the opposite EX stage. This aspect of the preferred embodiment greatly increases instruction throughput.

In the preferred embodiment, instructions are maintained in order until they cannot cause an exception. An exception is caused by a program error and is reported prior to completion of the instruction that generated the exception. By reporting the exception prior to instruction completion, the processor is left in a state which allows the instruction to be restarted and the effects of the faulting instruction to be nullified. Exceptions include, for example, divide-by-zero errors, invalid opcodes and page faults. Debug exceptions are also handled as exceptions, except for data breakpoints and single-step operations. After execution of the exception service routine, the instruction pointer points to the instruction that caused the exception and typically the instruction is restarted.

Any instruction which is capable of causing an exception must be restartable. Accordingly, if an exception occurs, the state of the machine must be restored to the state prior to starting the instruction. Thus, changes to the state of the machine by the instruction causing the exception and subsequent instructions must be undone. Typically, restarting the instruction involves resetting the state of the register file and restoring the stack pointer, the instruction pointer and the flags. Because most exceptions occur at the AC2 stage, the exception is asserted at the output of the AC2 (except for exclusive instructions that cause exceptions in the EX stage). Instructions are restarted at the ID1 stage.

If the instruction causing the exception is junior to the instruction in the corresponding AC2 stage (the neighboring instruction), then the neighboring instruction may continue to the EX stage. However, if the instruction causing the exception is the senior instruction, both instructions must be restarted. In other words, the state of the machine must be restored to the state which existed prior to any changes caused by the instruction causing the exception and will allow instructions earlier in the program sequence to continue through the pipelines.

In the preferred embodiment, if a non-exclusive multi-box instruction is executing in one pipeline, multiple instructions may flow through the other pipeline during execution of the multi-box instruction. Because a multi-box instruction may use the AC1, AC2 and EX stages, only the stage processing the microinstruction with the head bit for the multi-box instructions is kept in order. Hence, the AC1 and AC2 will not prevent junior instructions from advancing if the stages do not contain the microinstruction with the head bit. Two factors will control whether instructions can continue to flow: (1) whether the multi-box instruction creates a data dependency with a junior instruction or (2) whether the multi-box instruction causes a resource dependency with a junior instruction.

Resource dependencies are created when the junior instruction needs a resource being used by the senior instruction. For example, in the preferred embodiment, only the X-pipe EX unit has a multiplier, in order to reduce the area for the EX units. If a multi-box instruction is operating in the X-side EX unit, a subsequent instruction needing the multiplier cannot be executed until after completion of the senior instruction.

Figure 5 illustrates a flow chart illustrating the general operation of the pipe control unit 28 with regard to the passing of instruction from the AC2 stage to the EX stage and the completion of the EX stage. The pipe controller determines (200) whether an instruction can cause an exception at its present stage (or beyond). If not, the instruction is allowed to complete (202) ahead of senior instructions (so long as those senior instruction can no longer cause an exception). If the instruction may still cause an exception, then the pipe controller will not allow the instruction to change the state of the microprocessor before all senior instructions have made their changes to the state of the microprocessor at that state (204). In other words, all state changes are made in program order until the instruction can no longer cause an exception.

In the more specific case, discussed above, block 204 of the flow diagram is implemented by maintaining the program order of instructions through the AC2 stage. For the majority of instructions in the X86 instruction set, it can be determined whether an instruction will cause an exception by the AC2 stage. Exclusive instructions, which are allowed to cause an exception in the EX stage, are executed alone in the EX stage so that the state of the machine may be restored if an exception occurs.

While the above description provides that the instructions are kept in order through the point where they can no longer cause an exception, an alternative, more general, method of pipe control would be to allow instructions to proceed out of order, so long as the instruction did not alter the state of the processor.

## 5. Pipe Switching

Referring to Figures 1a and 1b, the pipe control unit 28 controls whether an instruction switches between pipelines after the ID2 stage. Hence an instruction may progress through the pipelines from ID2x to either AC1x or AC1y and from ID2y to either AC1x or AC1y under the control of the pipe control unit 28.

In the preferred embodiment, the pipe control unit 28 will decide which pipe, X or Y, to place an instruction based on certain criteria. The first criteria is whether one pipeline has a bubble which could be removed. If so, the pipeline will try to move the most senior of the instructions in the ID2 stage into that pipeline. Thus if AC1x is valid and AC1y is invalid, and the instruction in ID2x is the senior of the two instructions in the ID2 stage, then the pipe control unit 28 will transfer the instruction from ID1x to AC1y.

The second criteria is to prevent new bubbles in the pipeline from occurring. To prevent bubbles from occurring, the pipe control unit 28 will attempt to keep dependent pairs of instruction, where the dependent instruction may be delayed, from affecting other instructions. To accomplish this, in the preferred embodiment, the pipe control unit 28 will keep adjacent instructions in program order from being on top of one another in a pipeline.

Figure 6a illustrates this problem. At time T1, instruction I1 is in EXx, instruction I2 is in EXy, instruction I3 is in AC2y and instruction I4 is in AC2x. I2 has a read-after-write dependency on I1; in other words, for instruction I2 to be properly processed in the EXy stage, it must wait for the outcome of instruction I1 in the EXx stage. For example, I1 could be an ADD AX,BX instruction and I2 could be an ADD AX,CX instruction. I2 cannot complete because one of its operands will not be ready until after I1 completes. At time T2, I1 completes, leaving a bubble in EXx. I2 is executing in EXy. I3 cannot proceed to the EX stage until I2 completes. I4 cannot proceed to the EX stage because it is junior to I3 and, as stated above, instructions cannot proceed past a senior instruction until entering the EX stage.

The consequence of maintaining adjacent instructions in program order from being on top of one another in a pipeline is shown in Figure 6b. In this example, the pipe control unit 28 has ordered the pairs in AC2 at time T1 such that I3 is in AC2x and I4 is in AC2y. The reason for ordering the instructions in this manner is to prevent I3 from being above I2 in the Y pipeline. Thus, at time T2, I1 has completed the EX stage and moves to the writeback stage. I3 can now move into EXx, thus preventing the occurrence of a bubble in EXx. Similarly, I5 can move into AC2x.

In some instances, the pipe control unit 28 must place adjacent instruction above one another in a pipeline. Typically, this situation is caused by an X-only instruction, which must be placed in the X pipeline, or because the pipe control unit 28 needed to remove a bubble, which necessitated a perturbation in the desired order. Figure 7 illustrates such a situation. At time T1, I1 and I2 are in EXx and EXy, respectively, I3 and I4 are in AC2x and AC2y respectively, I5 and I6 are in AC1y and AC1x, respectively, because I6 is an X-only instruction and therefore the pipe control unit 28 was forced to put I6 into AC1x, even though doing so forced I5 to be on top of I4 in the Y pipeline. I7 and I8 are in ID2x and ID2y, respectively. I4 has a read-after-write dependency on I3 and I6 has a read-after-write dependency on I5. At T2, I1 and I2 have moved to the WB stage and I3 and I4 have moved into the EX stage. I6 has moved to AC2x and I5 has moved to AC2y; therefore the pipe control unit 28 has allowed I7 and I8 to switch pipelines in order to prevent I7 from being on top of I6 in the X pipeline. I9 and I10 have moved into ID2.

At T3, I3 has completed in EXx and moved to EXy and I4 remains in EXy to complete its operation. As described in connection with Figure 6a, neither I5 or I6 can proceed down either pipeline, and thus instructions I5 and above remain in their respective stages. At T4, I4 completes and I5 and I6 move into EXy and EXx, respectively. I7 and I8 move to AC2y and AC2x, respectively, I9 and I10 move to AC1y and AC1x, respectively, to prevent adjacent instructions I9 and I8 from both being in the X pipeline. I11 and I12 move into the ID2 stage.

At T5, I5 completes and I7 moves into EXy. I6 stays in EXx because of the read-after-write dependency. I9 moves to AC2y, I11 moves to AC1y and I3 moves to ID2x. As can be seen, the potential bubble created by I6 remaining in EXx has been avoided due to proper sequencing of the instructions by the pipe control unit 28.

Although a specific ordering of instructions has been described in connection with Figures 6-7, other methods of sequencing instructions may be used to promote the efficient flow of instructions through the pipeline. Also, the point of switching need not be at the ID2 stage. As shown above, the pipe control unit 28 uses the switching point to provide a sequence of instructions which reduces dependencies between instructions which could cause bubbles to be created.

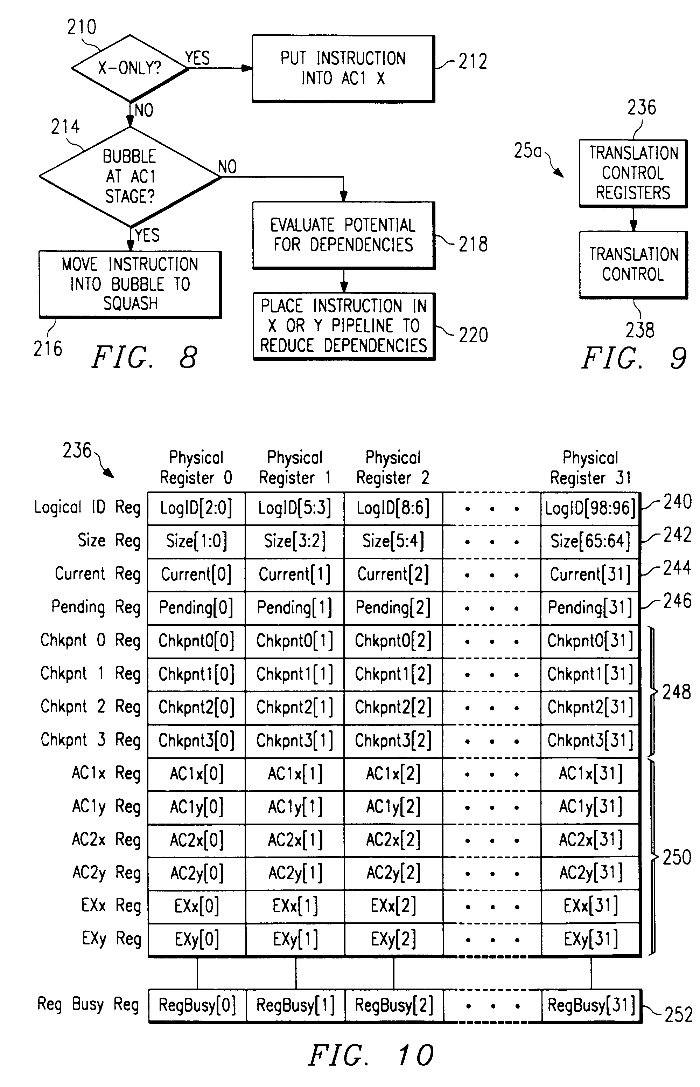

A flow chart illustrating the general operation of the pipe control unit with regard to pipe switching is shown in Figure 8. The pipe controller determines (210) whether the instruction must be placed down a certain pipeline, such as an X-only instruction. If so, the pipe control unit 28 will place (212) the instruction in that pipeline as available. If the instruction can be placed in any pipe, the pipe control unit 28 will determine (214) whether there is a bubble in either of the pipelines which could be filled. If so, the pipe control unit 28 will move (216) the instruction into the stage with the bubble. If there are no bubbles (or if both pipelines are available), the pipe control unit 28 will place instructions in the X or Y pipelines based on an evaluation of the best sequence for avoiding dependencies ( 218 and 220). As described above, in one embodiment, the pipe controller avoids dependencies by avoiding the placement of adjacent instructions above one another in the same pipeline.

## 6. Issuing Instructions Without Regard to Dependencies

Instructions from ID1 to ID2 without regard to dependencies which may exist between the two instructions. An alternative approach is to determine whether a pair (or more) of instructions have a dependency, and if so, issue the first instruction with a bubble in the corresponding stage in the other pipe such that the bubble remains paired with the issued instruction through the pipeline. Consequently, the number of instructions that are processed over a given time period will be reduced.

To improve performance, the microprocessor disclosed herein will issue instructions with dependencies simultaneously into the pipelines. The dependency is checked at the point where the instruction needs to use the data for which it is dependent. That is, the point at which the dependency will cause a stall in the pipeline depends upon the nature of the dependency -- if the dependent data is needed for an address calculation, the stall will occur in AC1, while if the data is needed for execution, the stall will occur in EX. Until the time of the stall, movement of the instructions in the pipe or other mechanisms may resolve the dependency, and thus provide for a more efficient flow of instructions.

## 7. Multi-threaded EX Operation

Referring to Figure 1a and 1b, the microsequencer circuitry 23 provides independent flows of microinstructions to the EX stages. Hence, control of the EXx stage is independent of control of the EXy stage.

By controlling the execution of both EX stages by two independent microinstruction flows, rather than using a single microinstruction word to control both EX stages, greater flexibility in performing the instruction is provided, thereby increasing performance. Further, the additional hardware which would be necessary for single microinstruction control of the two EX stages is avoided.

In particular, some exclusive instructions can benefit from the use of both the EXx and EXy stage. As well as using both EX stages, the exclusive instruction has access to both AC stages for address calculations --in such a case, the AC is also microinstruction controlled.

While both EX (and AC) stages are being used to execute a single instruction, the respective EX stages continue to receive two independent flows of microinstructions from the microsequencer. The operation of the two EX units is maintained by proper coding of the microinstructions.

## 8. Register Translation Unit

### 8.1. Register Translation Overview

Referring to Figure 1a and 1b, the register translation unit 25a is used for instruction level data hazard detection and resolution. Before completing execution in the EX pipe stage, each instruction must have its source operands valid. The register translation unit is used to track each of the registers to determine if an active instruction has an outstanding write (a "write pending").

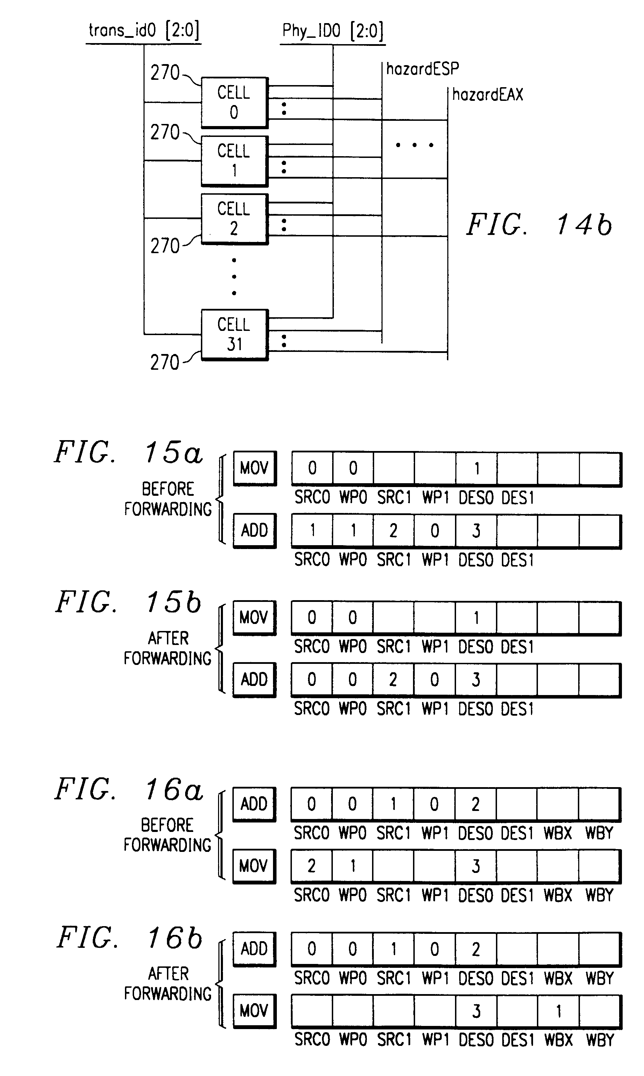

If an instruction has a source register with a write pending, a residual control word (See Section 9 and Figures 15a-b and 16a-b) associated with the instruction is marked at the AC1 stage to indicate that the source register has a write pending. As the instruction progress through the pipeline, each stage "snoops" the writeback bus to detect a write to the dependent register. If a write to the dependent register is detected, the write pending field in the residual control word associated with the source register is cleared.

Figure 9 illustrates a general block diagram of the register translation unit 25a. The Physical Register File (24 in Figure 1a) includes thirty two physical registers for storing information directed to the eight logical registers of the X86 architecture. Access to the physical registers is controlled by the register translation unit 25a. State information relating to the physical and logical registers is stored in translation control registers 236. Translation control circuitry 238 manages access to the physical registers based on the state information.

A true data dependency arises from a RAW hazard which prevents the instruction from completing. There are also dependencies corresponding to a WAR (write-after-read) hazard, called an antidependency, and a WAW (write-after-write) hazard, called an output dependence. Antidependencies and output dependencies, which are not true data dependencies, can be removed through the use of register renaming, which is controlled by the register translation unit 25a. In register renaming, more physical registers are provided than the architecture defines (logically or architecturally). By assigning a new physical register each time a logical register is to be written (destination of result), the register is renamed and eliminates both WAR and WAW hazards.

The X86 architecture defines 8 general purpose programmer visible registers (EAX, EBX, ECX, EDX, EDI, ESI, EBP, ESP). In the illustrated embodiment, there are 32 physical registers which will be used to map the eight general purpose registers (logical registers). Since the microprocessor will predict and execute instructions before a conditional branch has completed execution, the register translation unit must be able to handle the consequences of a mispredicted branch. If the prediction is incorrect, the microprocessor must restore the state back to the point of the conditional branch. As described below, checkpointing is used to save state information before the speculative path is taken. Recovery from a incorrectly predicted conditional branch involves reverting to the checkpointed physical registers.

For each AC1 pipe stage, the following operations are completed by the register translating and renaming hardware.

1. Allocate (rename) up to two new registers which are destinations of the current instructions in the AC pipe stage. The allocation will proceed in program order due to dependencies created if both instructions specify the same register as destinations.

2. Check for RAW dependencies for instructions in AC pipe stage.

3. Check physical register ID's on the write back bus for registers used during AC for address calculations to enable bypassing and clearing of the write pending bit in the register translation unit.

4. Logical to physical translations for up to four registers.

### 8.2. Translation Control Registers

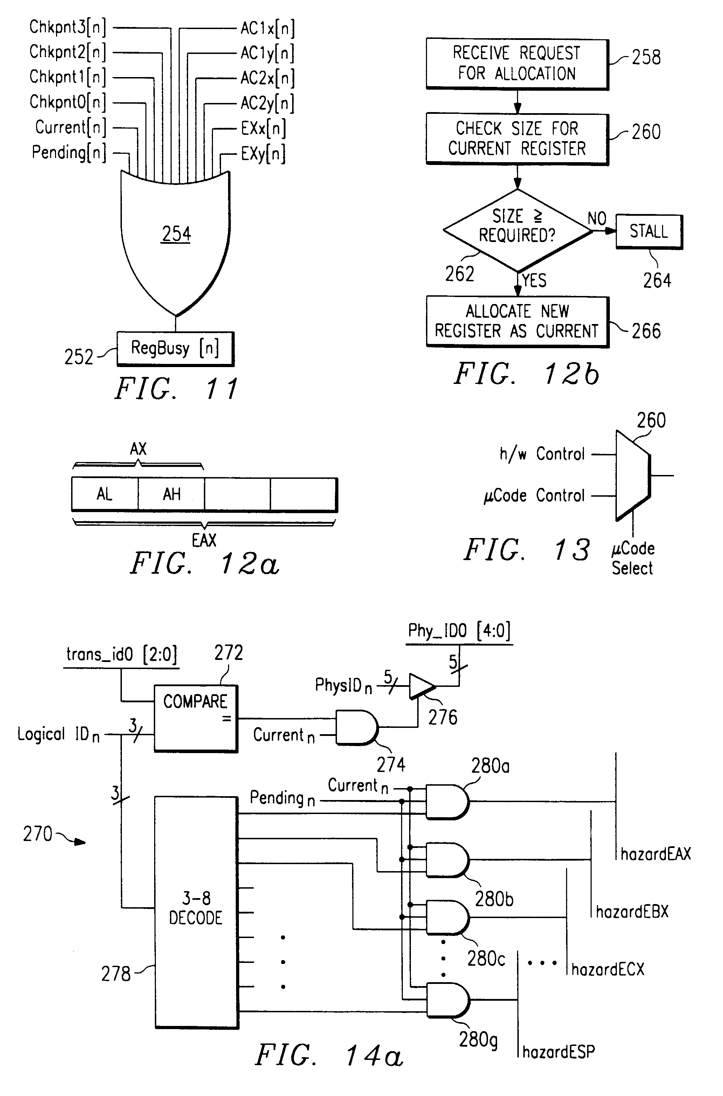

Figure 10 illustrates the translation control registers 236. A Logical ID register 240 maps logical registers to physical registers. The Size register 242 stores a code corresponding to the size of the logical register to which the physical register is assigned. This aspect is discussed in greater detail below. The Current register 244 indicates the registers which are the most recently assigned for a given logical register. Thus, every time a new physical register is allocated, the current bit for the physical register which previously was the current register for the corresponding logical register is turned off and the current bit for the newly allocated register is turned on. Consequently, at any time, the Current register 244 has eight bits on and twenty-four bits off. For each physical register, the Pending register 246 has a bit which indicates whether a write to that physical register is pending.

Four checkpoint registers 248, Chkpnt0 - Chkpnt3, are used to store a copy of the Current register 244, each time a checkpoint occurs. In the preferred embodiment, checkpoints occur whenever a conditional branch or a floating point operation passes through AC1. The checkpoint registers 248 are written to in a rotating basis. Exception Restore registers 250 store the current bits for each instruction in AC1, AC2 and EX, as they existed before the allocation for the instruction was made in the AC1 stage. The contents of the Exception Restore registers follow the instructions as they move from stage to stage.

### 8.3. Register Allocation

For each instruction which writes results to a logical register, a new physical register is allocated by the register translation unit 25a. The register allocation process first identifies a "free" physical register, i.e. a register which is not in use. Detection of free registers is discussed in connection with Figure 11. Once a free register is located, the logical register number is placed in the physical register data structure and is marked current. The previous physical register which represented the logical register has its current bit cleared.

Circuitry for identifying a free register is shown in Figure 10-11. A Register Busy register 252 has one bit location for each physical register. Each bit of the Register Busy register is set responsive to corresponding locations in the Pending, Current, Checkpoint and Exception Restore registers. As shown in Figure 11, bit $n$ of the Register Busy register 252 is the result of a logical OR operation on the $n$th bit of the Pending, Current, Checkpoint and Exception Restore registers. A register is free if it corresponding bit in the Register Busy register is set to "0" and is in use if the corresponding bit is set to "1".

Upon allocation, the corresponding bit of the Current register is set to "1" to mark the physical register as the current register. A code is placed in the corresponding three bits of the Logical ID register 240 to indicate the logical register to which the physical register is assigned, and the corresponding bits of the size register are set to the size of the logical register being allocated (see Table 1 below). The pending bit corresponding to the physical register is also set. The instruction causing the allocation will write to the assigned physical register and any reads by subsequent instructions from the logical register will result in reads from this new physical register. This renaming will occur during the AC1 pipe stage and will be processed in program order. Processing the instructions in program order is required for the case where both instructions in AC1x and AC1y specify the same logical register as a source and destination. As an example, this can occur if both instructions are an ADD and the AX register is defined as both a source and destination. Through register renaming two new physical registers will be allocated for the logical AX register, with the last one being marked as the current one. The example below shows how each instruction is renamed.

First instruction: (ADD AX, BX). Assume the physical register IDs for the AX and BX registers are currently "1" and "2", respectively, when the ADD instruction is received in AC1. Since the AX register is also the destination, a new physical register will be allocated for AX. This physical register will have an ID of "3" (assuming that physical register "3" is free). The add instruction would then add physical registers "1" and "2" and write the results into register "3".

AX (physical register 1) + BX (physical register 2) $\Rightarrow$ AX (physical register 3)

Second instruction: (ADD AX,BX). Since the AX register is a destination, a new physical register will be allocated for AX. This will have the ID of "4". Since the previous instruction renamed the AX register to the physical "3", it will be used as the AX source for the ADD, since it is marked as current as of the time of the allocation. Therefore, the second ADD instruction would add physical registers "3" and "2" and write the results into register "4."

AX (physical register 3) + BX (physical register 2) -> AX (physical register 4)

Since the X86 architecture allows certain registers to be addressed as words (e.g. "AX"), low bytes (e.g. "AL"), high bytes (e.g. "AH") or double words (e.g. "EAX"), a size is specified for each allocation, based on how the register was specified by the instruction. The possible allocatable portions of a register are shown in Figure 12a for the EAX register. Each physical register has a corresponding two bit field in the Size register which stores the code. Exemplary codes are shown in Table 1.

TABLE 1

| Codes for Size Register | | |
|---|---|---|
| Code | Size | Example |
| 00 | word | AX |
| 01 | low byte | AL |
| 10 | high byte | AH |
| 11 | double word | EAX |

16

A method for register translation using variable size registers is shown in the Figure 12b. The translation control circuitry in the register translation unit (25a in Figure 1a) compares the size of the logical register to be allocated with the size of the current register for that logical register and determines whether the register may be allocated or whether the instruction must be stalled.

A request for allocation is received (258), and the size of the register to be allocated is compared (260 and 262) with the size of the corresponding current register. If two instructions specify the same logical destination register but as different sizes (i.e., AH and AL), where the logical destination of the second instruction in program order does not fully include the portion of the logical register allocated to the first instruction, a RAW dependency based on size is created. Accordingly, a register cannot be allocated until this dependency has been resolved (264).

If the size of the logical register addressed by a current write instruction encompasses the portion of the logical register specified by an earlier write instruction (as defined in Table 2 below, using the EAX register as an example), the new register can be allocated (266).

Table 2

| Register Sizes which Allow Allocation for Registers with Size Dependencies | |
|---|---|
| Size of Register with Pending Write | Allowable Sizes for Allocating New Registers |
| AL | AL, AX, EAX |
| AH | AH, AX, EAX |
| AX | AX, EAX |
| EAX | EAX |

### 8.4. Instructions With Two Destinations

The majority of X86 instructions specify only one register destination. There are a few which specify two register destinations (e.g., XCHG AX,BX). So as not to complicate the register translation unit hardware, only one destination for an instruction can be renamed each clock. Therefore, a special case for the instructions which specify two destinations is used. These instructions, while in the AC1 pipe stage, will stall any other instruction from using the register translation hardware for one clock, so the second destination can be renamed.

### 8.5. Checkpointing Registers for Speculative Branch Execution

Referring to Figure 10, the microprocessor will predict the direction of a branch (conditional change of flow), and begin executing instructions in the predicted direction, before the branch has been resolved. If the branch is misprediction, the microprocessor must restore the processor state back to the point of the branch.

The register translation unit (25a in Figure 1a) allows the microprocessor to save the processor state at the boundary of a branch by checkpointing the registers -- copying the Current register 244 to one of the Checkpoint registers 248 -- before speculatively executing instructions in the predicted direction of the branch. The Checkpoint registers 248 are written to in a rotating order.

In the preferred embodiment, the registers are also checkpointed for floating point operations.

Since checkpointing allows the microprocessor to return to the state defined by the checkpoint registers, it could be used for every instruction. However, resources must be provided for each checkpoint, and therefore, there is a trade-off between the functionality of checkpointing and the hardware resources to be allocated to checkpointing. In the illustrated embodiment, four checkpoint registers are used, allowing up to four checkpoints at any one time.

Recovery from an incorrectly predicted branch (or a floating point error) involves reverting to the checkpointed physical registers. When a branch enters the AC stage of the pipeline the Current register 244 is copied to one of the Checkpoint registers 248 While executing instructions in the predicted direction, new registers will be allocated. When a new register is allocated, the physical register that is marked current will clear its current bit, as it normally would. If the predicted direction is incorrect, then the Checkpoint register 248 associated with the branch is copied to the current register, which will restore the state of the physical registers to the state which existed immediately prior to the branch. Hence, the microprocessor may recover from a mispredicted branch or a floating point error in a single clock cycle.

### 8.6. Recovery from Exceptions

Referring to Figure 10, recovery from exceptions is similar to recovery from a mispredicted branch. If an exception occurs with a given stage (AC1x, AC1y, AC2x, AC2y, EXx, EXy), the Exception register 250 associated with that stage is copied into the current register. Since the Exception register for a given stage contains a copy of the Current register 244 as it existed prior to the allocation (which occurred in the AC1 stage) for the present instruction in the stage, copying the associated Exception register 250 to the Current register 244 will reset the association of the physical registers to the logical registers to that which existed before the exception causing instruction entered AC1. Thus, the present invention allows the state of the machine to be modified, even though the instruction modifying the state may later cause an exception.

To determine which Exception register should be used to restore the Current register 244, the register translation unit 25a uses information from the pipe control unit (28 in Figure 1a). When an exception occurs, the pipe control unit will flush stages of the pipelines. Using signals from the pipe control unit which indicate which stages were flushed, and which stages were valid at the time of the flush, along with the XFIRST bit for each stage, the register translation unit will determine the most senior flushed stage. The exception register corresponding to this stage is copied into the Current register 244.

### 8.7. Microcontrol of the Register Translation Unit

Referring to Figure 1a, the register translation unit 25a is normally controlled via signals produced by the pipeline hardware. In certain instances, however, it is beneficial to control the register translation unit 25a through microcode signals generated by the microsequencer in microcontroller 26 as part of an instruction. For example, exclusive instructions will require access to the register translation unit hardware to determine which physical register is mapped to a logical register. Instructions such as PUSHA (push all) require a logical to physical translation of all eight logical registers during their execution.

To efficiently accommodate the need to access the register translation unit by exclusive instructions, control signals are multiplexed into the register translation unit 25a through multiplexers controlled by the microcode, as shown in Figure 13. Control signals generated by the hardware and by the microcode (via the microsequencer) are input to a multiplexer 260. The multiplexer passes on of the control signals based on the value of a Microcode Select signal which controls the multiplexer 260. The Microcode Select signal is generated by the microcode. Hence, if the microcode associated with an instruction needs the register translation unit 25a, one of the microinstruction bits enables the multiplexers 260 to pass the microcode control signals rather than the signals from the pipeline hardware. Other bits of the microinstruction(s) act as the control signals to the register translation unit 25a to enable the desired function. Instructions which do not need the register translation unit for their execution will enable the multiplexers to pass only the control signals generated by the hardware.

### 8.8. Register ID Translation and Hazard Detection

Responsive to a request for a logical register, the register translation unit (25a in Figure 1a) will supply the identification of the current physical register mapped to the requested logical register. Also, the register translation unit will output eight bits, one for each logical register, indicating whether the current physical register for the associated logical register has a write pending. These bits are used to detect RAW hazards.

In the preferred embodiment, the register translation unit is formed from a plurality of cells, each cell representing one physical register. Figure 14a illustrates a schematic representation of one cell 270 as it relates to register ID translation and hazard detection. In response to a 3-bit code representing one of the eight logical registers placed on the trans_id bus, a 5-bit code representing the current physical register for the specified logical register will be place on the phy_id bus. Each cell 270 receives the code from the trans_ID bus. The 3-bit code on the trans_id bus is compared to the bits of the Logical ID register corresponding to that cell. In the preferred embodiment, the bits of the control registers 240-252 are divided between the cells such that each cell contains the bits of each register 240-252 corresponding to its associated physical register.

The Logical ID bits are compared to the 3-bit code by comparator 272. The match signal is enabled if the 3-bit code equals the Logical ID bits. The match signal and the Current bit for the cell are input to AND gate 274. Hence, if the physical register represented by the cell is associated with the specified logical register, and if the physical register is marked as the current register for the specified logical register, the output of the AND gate 274 will be a "1". The output of AND gate 274 enables a 5-bit tri-state buffer 276. If the output of the AND gate is a "1", the buffer passes the physical ID associated with the cell to the phy_id bus. For a given logical register ID, only one physical register will be current; therefore, only one cell will have its tri-state buffer enabled.

The Logical ID bits are also input to a 3-to-8 decoder 278. Thus, one of the eight outputs of the decoder 278 will be enabled responsive to the logical register mapped to that cell. Each output of the decoder 278 is coupled to the input of a respective AND gate 280 (individually denoted as AND gates 280a-280g). Each AND gate 280 also receives the Current and Pending bits for the physical register associated with the cell. The output of each AND gate 280 is coupled to a respective hazard bus associated with each logical register. For example, AND gate 280a is coupled to the hazardEAX bus which is associated with the EAX logical register. AND gate 280g is coupled to the hazardESP bus which is associated with the ESP logical register.

For a given cell, at most one AND gate 280 will be enabled, if that cell represents the logical register mapped to the physical register represented by that cell, and if the physical register is marked current with a write pending. As shown in Figure 14b, the hazard buses perform a wired-OR on the outputs of each cell. For each hazard bus, only one of the associated AND gates 280 will be enabled, since only one Current bit associated with the logical register will be enabled. If the Pending bit associated with the current physical register is also enabled, the corresponding AND gate 280 will be enabled and the hazard bus will indicate that there is a write pending to that logical register. This information is used to detect RAW hazards.

## 9. Forwarding

As described above, a RAW dependency will cause the microprocessor to stall on the dependent instruction. In the preferred embodiment, "forwarding" is used to eliminate RAW dependencies in certain situations in order to increase instruction throughput. Forwarding modifies instruction data to eliminate RAW dependencies between two instructions which are both in the EX stage at the same time.

Two types of forwarding are used in the preferred embodiment. "Operand forwarding" forwards, under certain conditions, the source of a senior MOV (or similar)_instruction to a junior instruction as source data for that instruction. "Result forwarding" forwards, under certain conditions, the result of a senior instruction directly to the destination of a subsequent MOV (or similar) instruction.

The following code illustrates operand forwarding:

```
1) MOV AX,BX
2) ADD AX,CX
```

Referring to Figures 15a-b, using operand forwarding, the junior ADD instruction will be effectively modified to BX+CX$\Rightarrow$AX. Each instruction is associated with a residual control information stored in a residual control word which includes the sources (along with fields indicating whether there is a write pending to each source) and destinations for the operation, among other control information (not shown). Thus, assuming that physical register "0" is allocated to logical register BX and physical register "1" is allocated to logical destination register AX, a "0" is stored in the SRC0 (source 0) field and a "1" is stored in the DES0 (destination 0) field of the residual control word associated with the MOV instruction. Similarly, assuming that physical register "2" is allocated to logical register CX, forwarding allows a "1" to be stored in the SRC0 field of the residual control word associated with the ADD instruction (since the destination register of the MOV instruction is one of the sources for the ADD instruction) -- a "2" is stored in the SRC2 field and a "3" is stored in the DES0 field (since register renaming will find a free register for the logical destination AX register).

As can be seen, a RAW dependency exists between the MOV and the ADD instruction, since the MOV instruction must write to physical register "1" prior to execution of the ADD instruction. However, using operand forwarding, this dependency can be eliminated. As shown in Figure 15b, operand forwarding does not affect the MOV command. However, the residual control word of the ADD instruction is modified such that the SRC0 field point to physical register associated with logical source register BX for the MOV.

Similarly, result forwarding modifies the residual control word of a junior MOV instruction with the result of a senior instruction. To describe result forwarding, the following sequence is used:

```
1) ADD AX,BX
2) MOV CX,AX
```

Referring to Figures 16a-b, result forwarding modifies the MOV command such that the CX register is loaded with the data generated as the result of the ADD instruction. Physical register "0" is allocated to logical source register BX, physical register "1" is allocated to logical source register AX, physical register "2" is allocated to logical destination register AX, and physical register "3" is allocated to logical destination register CX. Thus, a RAW dependency exists between the two instructions, since the destination of the ADD instruction (physical register 2) is the source of the MOV instruction.

After result forwarding (Figure 16b), the ADD instruction remains unchanged; however the residual control word associated with the MOV instruction is modified such that the destination register CX (physical register 3) receives its data from the write-back bus associated with the EX unit performing the ADD (shown in Figure 16b as the X-side write-back bus) at the same time AX is written. Consequently, the RAW dependency is eliminated, and both the ADD and the MOV instructions may be executed simultaneously.

Forwarding is used only under certain conditions. One of the instructions in the sequence must be a MOV instruction or similar "non-working" instruction. A non-working instruction is one that transfers operand data from one location to another, but does not perform substantive operations on the data. A working instruction generates new data in response to operand data or modifies operand data. In the X86 instruction set, the non-working instructions would include MOV, LEA, PUSH <reg>, and POP <reg>. Also, OR <reg1>,<reg1> and AND <reg1>,<reg1> (where both the source and destination registers are the same) can be considered "non-working" instructions because they are used only to set flags.

Further, in the preferred embodiment, forwarding is used only in cases where both instructions in the sequence are in their respective EX units at the same clock cycle. Forwarding searches up to three instructions (in program order) ahead of an instruction in the AC2 stage to determine whether a forwarding case can occur. Even if the forwarding instruction is two instructions ahead, forwarding can occur if the forwarding instruction delays in the EX stage long enough for the instruction in the AC2 stage to move to the EX stage.

As shown in Figure 17a, in the situation where instructions "1" and "2" are in the X- and Y-side EX units, respectively, and instructions "3" and "4" are in the X- and Y-side AC2 units, instruction "4" looks at instructions "3" and "1" to determine whether an operand or result forwarding situation is possible. Since instruction "4" is still in the AC2 stage, it cannot forward with instruction "1" unless instruction "1" delays in the EX stage until instruction "4" is issued into the Y-side EX stage. Similarly, if a forwarding situation is possible with instruction "3", the forwarding will occur only if both "3" and "4" are issued to the respective EX stages such that they are concurrently in the EX stage for at least one clock cycle.

Instruction "4" does not look to instruction "2" for a forwarding situation, since both instructions cannot be concurrently in the EX unit given the architecture shown. Bypassing may be used to reduce the latency period of RAW dependencies between instruction "4" and "2". With alternative pipeline configurations, such as an architecture which allowed switching pipes at the AC2/EX boundary, it would be possible to forward between instruction "4" and "2".

Figure 17b illustrates the conditions monitored for forwarding in connection with instruction "3" given the initial conditions set forth in connection with Figure 17a. In this state, only instruction "2" is monitored for a forwarding situation. Instruction "1" cannot forward with instruction "3" because they cannot concurrently be in the EX stage. Instruction "3" cannot have a RAW dependency on instruction "4" because instruction "4" is junior to instruction "3" (although, as shown in Figure 17a, instruction "4" can have a RAW dependency on instruction "3").

A block diagram of the forwarding control circuitry is shown in Figure 18. The circuitry of the forwarding control stage is associated with the AC2 stage. The forwarding control circuitry 300 includes operand monitor and control circuitry 302 to monitor the source operands of the instructions in the AC2 pipe stage and the source and destination operands of the instructions in the EX stage and to modify the residual control information as described above. Further, once the possibility of a forwarding situation is detected, instruction movement monitoring circuitry 304 of the forwarding control circuitry 300 monitors movements of the instructions to detect the presence of both instructions in the respective EX units to implement forwarding. Control circuitry 306 coordinates the operand monitor and control circuitry 302 and instruction movement monitor circuitry 304.

In the preferred embodiment, the forwarding circuitry is part of the register file control found in the physical register file (24 in Figure 1a). The register file control also maintains the residual control words.

While forwarding has been discussed in relation to a processor using two instruction pipelines, it could be similarly used in connection with any number of pipelines. In this case, the forwarding control circuitry would monitor the residual control words associated with instructions in the EX units of each of the pipelines at the EX and AC2 stages.

Forwarding and register translation are independent of one another. In a given microprocessor, either or both techniques can be used to increase instruction throughput.

## 10. Conclusion

While the present invention has been described in connection with a specific embodiment of two pipelines with specific stages, it should be noted that the invention, as defined by the claims, could be used in connection with more than two pipelines and different stage configurations.

The pipe control unit disclosed herein provides an efficient flow of instructions through the pipeline, which increases the rate at which the instructions are processed. Hence, a higher instruction throughput can be achieved without resort to higher frequencies. Further, the register translation unit and forwarding eliminate many dependencies, thereby reducing the need to stall instructions.

Although the Detailed Description of the invention has been directed to certain exemplary embodiments, various modifications of these embodiments, as well as alternative embodiments, will be suggested to those skilled in the art. For example, while various methods and circuits for pipeline control have been illustrated in conjunction with one another, independent use one or more of the various methods and circuits will generally lead to beneficial results.

**Claims**

1. A microprocessor (10) including a register renaming apparatus (25), the microprocessor having at least one instruction pipeline (102, 104) with a plurality of stages for processing a stream of instructions, and having a plurality of logical registers (EAX, etc.), the stream of instructions including write instructions that when processed addressably write to a logical register, the microprocessor comprising:

   a plurality of physical registers (24) exceeding in number the plurality of logical registers (EAX, etc); and register translation circuitry (25a) coupled to said at least one instruction pipeline (102, 104) and to said physical registers (24), said register translation circuitry (25a) being operable to allocate, for each write instruction processed, a physical register to said logical register;

   characterised in that:

   said write instructions include write instructions that when processed addressably write to a logical register which has multiple addressable portions; and
   when a current write instruction and a previous write instruction addressably write to the same multiple addressable portions logical register, said register translation circuitry (25a) performs a comparison of which portion of said logical register for said current write instruction is addressed with an indication identifying which portion of said same logical register for said previous write instruction was addressed, and selectively allocates a new physical register or stalls the current write instruction based on the result of said comparison.

2. A microprocessor according to Claim 1, wherein the addressable portions of said logical register having multiple addressable portions are selected from the group consisting of: byte; word; and doubleword.

3. A microprocessor according to Claim 1 or Claim 2, wherein the microprocessor is an x86-based microprocessor, and wherein said logical register having multiple addressable portions is selected from the group consisting of: EAX; EBX; ECX; EDX; EDI; ESI; EBP; and ESP.

4. A microprocessor according to any of Claims 1-3, wherein said register translation circuitry (25a) determines whether the portion of said logical register having multiple addressable portions addressed by said current write instruction encompasses the portion of said logical register addressed by said previous write instruction.

5. A microprocessor according to Claim 4, wherein said register translation circuitry (25a) allocates said new physical register to said logical register if the portion of said logical register addressed by said current instruction encompasses the portion of said logical register addressed by said previous instruction.

6. A microprocessor according to Claim 4 or Claim 5, wherein said register translation circuitry (25a) does not allocate said new physical register to said logical register having multiple addressable portions if the portion of said logical register addressed by said current instruction does not encompass the portion of said logical register addressed by said previous instruction.

7. A microprocessor according to any one of Claims 1-6, wherein all of said plurality of logical registers (EAX, etc) have multiple addressable portions.

8. A microprocessor according to any one of Claims 1-7, wherein said indication comprises a stored code corresponding to an addressed portion of said logical register for said previous write instruction and of said physical register assigned thereto.

9. A microprocessor according to any one of Claims 1-8, wherein said previous write instruction is a pending write instruction.

10. A method of allocating registers in a microprocessor (10) having at least one instruction pipeline (102, 104) with a plurality of stages for processing a stream of instructions, and having a plurality of logical registers (EAX, etc), the stream of instructions including write instructions that when processed addressably write to a logical register, the method comprising:

   allocating, for each of said write instructions processed, one of plurality of physical registers (24) to said logical register wherein said plurality of physical registers exceed in number the plurality of logical registers; and the method being characterised in that:

said write instructions include write instructions that when processed addressably write to a logical register which has multiple addressable portions; and

when a current write instruction and previous write instruction addressably write to the same multiple addressable portions logical register, a comparison is performed of which portion of said logical register for said current write instruction is addressed with an indication identifying which portion of said logical register for said previous write instruction was addressed, and a new physical register is selectively allocated or the current write instruction is stalled based on the result of said comparison.

11. A method according to Claim 10, wherein the addressable portions of said logical register having multiple addressable portions are selected from the group consisting of: byte; word; and doubleword.

12. A method according to Claim 10 or Claim 11, wherein the microprocessor is an x86-based microprocessor, and wherein said logical register having multiple addressable portions is selected from the group consisting of: EAX; EBX; ECX; EDX; EDI; ESI; EBP; and ESP.

13. A method according to any of Claims 10-12, wherein said step of selectively allocating includes determining whether the portion of said logical register having multiple addressable portions addressed by said current write instruction encompasses the portion of said logical register addressed by said previous write instruction.

14. A method according to Claim 13, wherein said step of selectively allocating includes allocating said new physical register to said logical register if the portion of said logical register addressed by said current instruction encompasses the portion of said logical register addressed by said previous instruction.

15. A method according to Claim 13 or Claim 14, wherein said step of selectively allocating includes not allocating said new physical register to said logical register if the portion of said logical register addressed by said current instruction does not encompass the portion of said logical register addressed by said previous instruction.

16. A method according to any one of Claims 10-15, wherein all of said plurality of logical registers (EAX, etc) have multiple addressable portions.

17. A method according to any one of Claims 10-16, wherein said indication comprises a stored code corresponding to an addressed portion of said logical register for said previous write instruction and of said physical register assigned thereto.

18. A method according to any one of Claims 10-17, wherein said previous write instruction is a pending write instruction.

**Patentansprüche**

1. Ein Mikroprozessor (10), der eine Registerumbenennungsvorrichtung (25) aufweist, wobei der Mikroprozessor wenigstens eine Befehlspipeline (102, 104) mit einer Vielzahl von Stufen zur Verarbeitung eines Befehlsstroms und eine Vielzahl von logischen Registern (EAX, etc.) aufweist, wobei der Befehlsstrom Schreibbefehle aufweist, die, wenn sie verarbeitet werden, adressierbar in ein logisches Register schreiben, wobei der Mikroprozessor aufweist:

eine Vielzahl von physikalischen Registern (24), die anzahlmässig die Vielzahl von logischen Registern (EAX, etc.) übersteigen; und

eine Registerübersetzungsschaltungsanordnung (25a), die mit der wenigstens einen Befehlspipeline (102, 104) und den physikalischen Registern (24) gekoppelt ist, wobei die Registerübersetzungsschaltungsanordnung (25a) dem logischen Register, für jeden zu verarbeitenden Schreibbefehl, ein physikalisches Register zuweist;

dadurch gekennzeichnet, daß

die Schreibbefehle Schreibbefehle aufweisen, die, wenn sie verarbeitet werden, adressierbar in ein logisches Register schreiben, das mehrfach adressierbare Bereiche aufweist; und daß,

wenn ein momentaner Schreibbefehl und ein vorhergehender Schreibbefehl adressierbar in dasselbe logische Register mit mehrfach adressierbaren Bereichen schreiben, die Registerübersetzungsschaltungsanordnung (25a) einen Vergleich, welcher Bereich des logischen Registers für den momentanen Schreibbefehl adressiert wird, mit einer Anzeige durchführt, die identifiziert, welcher Bereich desselben logischen Registers für den vorhergehenden Schreibbefehl adressiert wurde, und auf der Grundlage des Ergebnisses des Vergleichs selektiv ein neues physikalisches Register alloziert oder den momentanen Schreibbefehl verzögert.

2. Ein Mikroprozessor nach Anspruch 1, dadurch gekennzeichnet, daß die adressierbaren Bereiche des logischen Registers mit mehrfach adressierbaren Bereichen aus der aus Byte, Wort und Doppelwort bestehenden Gruppe ausgewählt werden.

3. Ein Mikroprozessor nach Anspruch 1 oder Anspruch 2, dadurch gekennzeichnet, daß der Mikroprozessor ein x86-basierter Mikroprozessor ist, und dadurch, daß das logische Register mit mehrfach adressierbaren Bereichen aus der aus EAX, EBX, ECX, EDX, EDI, ESI, EBP und ESP bestehenden Gruppe ausgewählt wird.

4. Ein Mikroprozessor nach einem der Ansprüche 1 bis 3, dadurch gekennzeichnet, daß die Registerübersetzungsschaltungsanordnung (25a) ermittelt, ob der Bereich des logischen Registers mit mehrfach adressierbaren Bereichen, der durch den momentanen Schreibbefehl adressiert wird, den Bereich des logischen Registers, der durch den vorhergehenden Schreibbefehl adressiert wird, umfaßt.

5. Ein Mikroprozessor nach Anspruch 4, dadurch gekennzeichnet, daß die Registerübersetzungsschaltungsanordnung (25a) dem logischen Register das neue physikalische Register zuweist, falls der Bereich des logischen Registers, der durch den momentanen Befehl adressiert wird, den Bereich des logischen Registers, der durch den vorhergehenden Befehl adressiert wird, umfaßt.

6. Ein Mikroprozessor nach Anspruch 4 oder Anspruch 5, dadurch gekennzeichnet, daß die Registerübersetzungsschaltungsanordnung (25a) dem logischen Register mit mehrfach adressierbaren Bereichen das neue physikalische Register nicht zuweist, falls der Bereich des logischen Registers, der durch den momentanen Befehl adressiert wird, den Bereich des logischen Registers, der durch den vorhergehenden Befehl adressiert wird, nicht umfaßt.

7. Ein Mikroprozessor nach einem der Ansprüche 1 bis 6, dadurch gekennzeichnet, daß alle aus der Vielzahl von logischen Registern (EAX, etc.) mehrfach adressierbare Bereiche aufweisen.

8. Ein Mikroprozessor nach einem der Ansprüche 1 bis 7, dadurch gekennzeichnet, daß die Meldung einen gespeicherten Code aufweist, der mit einem adressierten Bereich des logischen Registers für den vorhergehenden Schreibbefehl und des diesem zugeordneten physikalischen Register korrespondiert.

9. Ein Mikroprozessor nach einem der Ansprüche 1 bis 8, dadurch gekennzeichnet, daß der vorhergehende Schreibbefehl ein wartender Schreibbefehl ist.

10. Ein Verfahren zum Allozieren von Registern in einem Mikroprozessor (10), der wenigstens eine Befehlspipeline (102, 104) mit einer Vielzahl von Stufen zur Verarbeitung eines Befehlsstroms und eine Vielzahl von logischen Registern (EAX, etc.) aufweist, wobei der Befehlsstrom Schreibbefehle aufweist, die, wenn sie verarbeitet werden, adressierbar in ein logisches Register schreiben, wobei das Verfahren umfaßt:

Zuweisen, für jeden der zu verarbeitenden Schreibbefehle, eines aus einer Vielzahl von physikalischen Registern (24) zu dem logischen Register, wobei die Vielzahl von physikalischen Registern anzahlmässig die Vielzahl von logischen Registern übersteigt; und

wobei das Verfahren dadurch charakterisiert ist, daß

die Schreibbefehle Schreibbefehle aufweisen, die, wenn sie verarbeitet werden, adressierbar in ein logisches Register schreiben, das mehrfach adressierbare Bereiche aufweist; und daß,

wenn ein momentaner Schreibbefehl und ein vorhergehender Schreibbefehl adressierbar in dasselbe logische Register mit mehrfach adressierbaren Bereichen schreiben, ein Vergleich, welcher Bereich des logischen Registers für den momentanen Schreibbefehl adressiert wird, mit einer Anzeige durchführt wird, die identifiziert, welcher Bereich desselben logischen Registers für den vorhergehenden Schreibbefehl adressiert wurde, und auf der Grundlage des Ergebnisses des Vergleichs ein neues physikalisches Register selektiv alloziert oder der momentane Schreibbefehl verzögert wird.

11. Ein Verfahren nach Anspruch 10, dadurch gekennzeichnet, daß die adressierbaren Bereiche des logischen Registers mit mehrfach adressierbaren Bereichen aus der aus Byte, Wort und Doppelwort bestehenden Gruppe ausgewählt werden.

12. Ein Verfahren nach Anspruch 10 oder Anspruch 11, dadurch gekennzeichnet, daß der Mikroprozessor ein x86-basierter Mikroprozessor ist, und dadurch, daß das logische Register mit mehrfach adressierbaren Bereichen aus der aus EAX, EBX, ECX, EDX, EDI, ESI, EBP und ESP bestehenden Gruppe ausgewählt wird.

13. Ein Verfahren nach einem der Ansprüche 10 bis 12, dadurch gekennzeichnet, daß der Schritt des selektiven Allozierens umfaßt, zu ermitteln, ob der Bereich des logischen Registers mit mehrfach adressierbaren Bereichen, der durch den momentanen Schreibbefehl adressiert wird, den Bereich des logischen Registers, der durch den vorhergehenden Schreibbefehl adressiert wird, umfaßt.

14. Ein Verfahren nach Anspruch 13, dadurch gekennzeichnet, daß der Schritt des selektiven Allozierens umfaßt, dem logischen Register das neue physikalische Register zu zuweisen, falls der Bereich des logischen Registers, der durch den momentanen Befehl adressiert wird, den Bereich des logischen Registers, der durch den vorhergehenden Befehl adressiert wird, umfaßt.

15. Ein Verfahren nach Anspruch 13 oder Anspruch 14, dadurch gekennzeichnet, daß der Schritt des selektiven Allozierens umfaßt, dem logischen Register das neue physikalische Register nicht zu zuweisen, falls der Bereich des logischen Registers, der durch den momentanen Befehl adressiert wird, den Teil des logischen Registers, der durch den vorhergehenden Befehl adressiert wird, nicht umfaßt.

16. Ein Verfahren nach einem der Ansprüche 10 bis 15, dadurch gekennzeichnet, daß alle aus der Vielzahl der logischen Register (EAX, etc.) mehrfach adressierbare Bereiche aufweisen.

17. Ein Verfahren nach einem der Ansprüche 10 bis 16, dadurch gekennzeichnet, daß die Meldung einen gespeicherten Code aufweist, der mit einem adressierten Bereich des logischen Registers für den vorhergehenden Schreibbefehl und des diesem zugeordneten physikalischen Register korrespondiert.

18. Ein Verfahren nach einem der Ansprüche 10 bis 17, dadurch gekennzeichnet, daß der vorhergehende Schreibbefehl ein wartender Schreibbefehl ist.

## Revendications

1. Microprocesseur (10) incluant un dispositif de changement de dénomination de registre (25), le microprocesseur ayant au moins un pipe-line d'instructions (102, 104) avec plusieurs étages pour traiter un flux d'instructions, et ayant une pluralité de registres logiques (EAX, etc.), le flux d'instructions incluant des instructions d'écriture qui, lorsqu'elles sont traitées, écrivent de façon adressable dans un registre logique, comprenant :

une pluralité de registres physiques (24) excédant en nombre la pluralité de registres logiques (EAX, etc.) ; et des circuits de traduction de registre (25a) raccordés audit au moins un pipe-line d'instructions (102, 104) et auxdits registres physiques (24), lesdits circuits de traduction de registre (25a) servant à allouer audit registre logique, pour chaque instruction d'écriture traitée, un registre physique ;

caractérisé en ce que lesdites instructions d'écriture comprennent des instructions d'écriture qui, lorsqu'elles sont traitées, écrivent de façon adressable dans un registre logique qui a de multiples parties adressables ; et en ce que, lorsqu'une instruction d'écriture courante et une instruction d'écriture précédente écrivent de façon adressable dans le même registre à parties adressables multiples, lesdits circuits de traduction de registre (25a) effectuent une comparaison de la partie qui est adressée dudit registre logique pour ladite instruction d'écriture courante avec une indication identifiant la partie qui avait été adressée dudit même registre logique pour ladite instruction d'écriture précédente, et allouent de manière sélective un nouveau registre physique ou bloquent l'instruction d'écriture courante en se basant sur le résultat de ladite comparaison.

2. Microprocesseur selon la revendication 1, dans lequel les parties adressables dudit registre logique ayant de multiples parties adressables sont choisies dans le groupe constitué de : octet, mot ; et double mot.

3. Microprocesseur selon la revendication 1 ou la revendication 2, dans lequel le microprocesseur est un microprocesseur à base de x86, et dans lequel ledit registre à décalage ayant de multiples parties adressables, est choisi à partir du groupe constitué de EAX ; EBX ; ECX; EDX ; EDI ; ESI ; EBP ; et ESP.

4. Microprocesseur selon l'une quelconque des revendications 1 à 3, dans lequel lesdits circuits de traduction de registre (25a) déterminent si la partie dudit registre logique ayant de multiples parties adressables, adressée par ladite instruction d'écriture courante, contient la partie dudit registre logique adressée par ladite instruction d'écriture précédente.

5. Microprocesseur selon la revendication 4, dans lequel lesdits circuits de traduction de registre (25a) allouent ledit nouveau registre physique audit registre logique si la partie dudit registre logique adressée par ladite instruction courante contient la partie dudit registre logique adressée par ladite instruction précédente.

6. Microprocesseur selon la revendication 4 ou la revendication 5, dans lequel lesdits circuits de traduction de registres (25a) n'allouent pas ledit nouveau registre physique audit registre logique ayant de multiples parties adressables, si la partie dudit registre logique adressée par ladite instruction courante ne contient pas la partie dudit registre logique adressée par ladite instruction précédente.

7. Microprocesseur selon l'une quelconque des revendications 1 à 6, dans lequel tous les registres de ladite pluralité de registres logiques (EAX, etc.) ont de multiples parties adressables.

8. Microprocesseur selon l'une quelconque des revendications 1 à 7, dans lequel ladite indication comprend un code mémorisé correspondant à une partie adressée dudit registre logique pour ladite instruction d'écriture précédente et dudit registre physique qui lui est affecté.

9. Microprocesseur selon l'une quelconque des revendications 1 à 8, dans lequel ladite instruction d'écriture précédente est une instruction d'écriture en attente.

10. Procédé d'allocation de registres dans un microprocesseur (10) ayant au moins un pipe-line d'instructions (102, 104) avec plusieurs étages pour traiter un flux d'instructions, et ayant une pluralité de registres logiques (EAX, etc.), le flux d'instructions incluant des instructions d'écriture qui, lorsqu'elles sont traitées, écrivent de façon adressable dans un registre logique, le procédé comprenant :

l'allocation audit registre logique, pour chacune desdites instructions d'écriture traitées, de l'un d'une pluralité de registres physiques (24), ladite pluralité de registres physiques excédant en nombre la pluralité de registres logiques ; et
le procédé étant caractérisé :
en ce que lesdites instructions d'écriture comprennent des instructions d'écriture qui, lorsqu'elles sont traitées, écrivent de façon adressable dans un registre logique qui a de multiples parties adressables et
en ce que, lorsqu'une instruction d'écriture courante et une instruction d'écriture précédente écrivent de façon adressable dans le même registre à parties adressables multiples, on effectue une comparaison de la partie qui est adressée dudit registre logique pour ladite instruction d'écriture courante avec une indication identifiant la partie qui avait été adressée dudit registre logique pour ladite instruction d'écriture précédente, et l'on alloue de manière sélective un nouveau registre physique ou l'on bloque l'instruction d'écriture courante en se basant sur le résultat de ladite comparaison.

11. Procédé selon la revendication 10, dans lequel les parties adressables dudit registre logique ayant de multiples parties adressables sont choisies dans le groupe constitué de : octet, mot ; et double mot.

12. Procédé selon la revendication 10 ou la revendication 11, dans lequel le microprocesseur est un microprocesseur à base de x86, et dans lequel ledit registre logique ayant de multiples parties adressables, est choisi à partir du groupe constitué de EAX ; EBX ; ECX; EDX ; EDI ; ESI ; EBP ; et ESP.

13. Procédé selon l'une quelconque des revendications 10 à 12, dans lequel ladite étape d'allocation sélective comprend la détermination du fait que la partie dudit registre logique ayant de multiples parties adressables, adressée par ladite instruction d'écriture courante, contient la partie dudit registre logique adressée par ladite instruction d'écriture précédente.

14. Procédé selon la revendication 13, dans lequel ladite étape d'allocation sélective comprend l'allocation dudit nouveau registre physique audit registre logique si la partie dudit registre logique adressée par ladite instruction courante contient la partie dudit registre logique adressée par ladite instruction précédente.

15. Procédé selon la revendication 13 ou la revendication 14, dans lequel ladite étape d'allocation sélective comprend la non-allocation dudit nouveau registre physique audit registre logique ayant de multiples parties adressables, si la partie dudit registre logique adressée par ladite instruction courante ne contient pas la partie dudit registre logique adressée par ladite instruction précédente.

16. Procédé selon l'une quelconque des revendications 10 à 15, dans lequel tous les registres de ladite pluralité de registres logiques (EAX, etc.) ont de multiples parties adressables.

17. Procédé selon l'une quelconque des revendications 10 à 16, dans lequel ladite indication comprend un code mémorisé correspondant à une partie adressée dudit registre logique pour ladite instruction d'écriture précédente et dudit registre physique qui lui est affecté.

18. Procédé selon l'une quelconque des revendications 10 à 17, dans lequel ladite instruction d'écriture précédente est une instruction d'écriture en attente.

*FIG. 1a*

FIG. 1b

```
┌─────────────────────────┐
│            IF           │
└─────────────────────────┘
             │
             ▼
┌─────────────────────────┐
│           ID1           │
└─────────────────────────┘
      │             │
      ▼             ▼
┌──────────┐   ┌──────────┐
│   ID2X   │   │   ID2Y   │
└──────────┘   └──────────┘
      │    ╳        │
      ▼             ▼
┌──────────┐   ┌──────────┐
│   AC1X   │   │   AC1Y   │
└──────────┘   └──────────┘
      │             │
      ▼             ▼
┌──────────┐   ┌──────────┐
│   AC2X   │   │   AC2Y   │
└──────────┘   └──────────┘
      │             │
      ▼             ▼
┌──────────┐   ┌──────────┐
│   EXX    │   │   EXY    │
└──────────┘   └──────────┘
      │             │
      ▼             ▼
┌──────────┐   ┌──────────┐
│   WBX    │   │   WBY    │
└──────────┘   └──────────┘
   X-PIPE        Y-PIPE
```

102        104

FIG. 3

124  126  128  130  132  134  136  138  140  142

SYSTEM CLOCK

INTERNAL CLOCK

122

X PIPE

| $ID1_{X0}$ | $ID1_{X1}$ | $ID1_{X2}$ | $ID1_{X3}$ | | | | | |
| | $ID2_{X0}$ | $ID2_{X1}$ | $ID2_{X2}$ | $ID2_{X3}$ | | | | |
| | | $AC1_{X0}$ | $AC1_{X1}$ | $AC1_{X2}$ | $AC1_{X3}$ | | | |
| | | | $AC2_{X0}$ | $AC2_{X1}$ | $AC2_{X2}$ | $AC2_{X3}$ | | |
| | | | | $EX_{X0}$ | $EX_{X1}$ | $EX_{X2}$ | $EX_{X3}$ | |
| | | | | | $WB_{X0}$ | $WB_{X1}$ | $WB_{X2}$ | $WB_{X3}$ |

Y PIPE

| $ID1_{Y0}$ | $ID1_{Y1}$ | $ID1_{Y2}$ | $ID1_{Y3}$ | | | | | |
| | $ID2_{Y0}$ | $ID2_{Y1}$ | $ID2_{Y2}$ | $ID2_{Y3}$ | | | | |
| | | $AC1_{Y0}$ | $AC1_{Y1}$ | $AC1_{Y2}$ | $AC1_{Y3}$ | | | |
| | | | $AC2_{Y0}$ | $AC2_{Y1}$ | $AC2_{Y2}$ | $AC2_{Y3}$ | | |
| | | | | $EX_{Y0}$ | $EX_{Y1}$ | $EX_{Y2}$ | $EX_{Y3}$ | |
| | | | | | $WB_{Y0}$ | $WB_{Y1}$ | $WB_{Y2}$ | $WB_{Y3}$ |

FIG. 2

FIG. 4

STALL (n-1) → STAGE n-1 ← FLUSH
DELAY (n-1) ←

STALL (n) → STAGE n ← FLUSH
DELAY (n) ←

STALL (n+1) → STAGE n+1 ← FLUSH
DELAY (n+1) ←

200

YES ← INSTRUCTION CAN FAULT? → NO

204 — ALLOW INSTRUCTION TO CHANGE STATE OF MACHINE IN PROGRAM ORDER ONLY

ALLOW INSTRUCTION TO COMPLETE BEFORE SENIOR INSTRUCTION — 202

FIG. 5

FIG. 6a

|      | $T_1$ |       | $T_2$ |       |
|------|-------|-------|-------|-------|
| AC2  | $I_4$ | $I_3$ | $I_4$ | $I_3$ |
| EX   | $I_1 \xrightarrow{RAW} I_2$ | | | $I_2$ |
| WB   |       |       | $I_1$ |       |
|      | X PIPE Y | | X PIPE Y | |

FIG. 6b

|      | $T_1$ |       | $T_2$ |       |
|------|-------|-------|-------|-------|
| AC2  | $I_3$ | $I_4$ | $I_5$ | $I_4$ |
| EX   | $I_1 \xrightarrow{RAW} I_2$ | | $I_3$ | $I_2$ |
| WB   |       |       | $I_1$ |       |
|      | X PIPE Y | | X PIPE Y | |

FIG. 7

|      | $T_1$ |        | $T_2$ |           | $T_3$ |          | $T_4$ |          | $T_5$ |          |
|------|-------|--------|-------|-----------|-------|----------|-------|----------|-------|----------|
| ID2  | $I_7$ | $I_8$  | $I_9$ | $I_{10}$  | $I_9$ | $I_{10}$ | $I_{11}$ | $I_{12}$ | $I_{13}$ | $I_{12}$ |
| AC1  | $I_6 \xleftarrow{RAW} I_5$ | | $I_8$ | $I_7$ | $I_8$ | $I_7$ | $I_{10}$ | $I_9$ | $I_{10}$ | $I_{11}$ |
| AC2  | $I_3 \xrightarrow{RAW} I_4$ | | $I_6 \xleftarrow{RAW} I_5$ | | $I_6 \xleftarrow{RAW} I_5$ | | $I_8$ | $I_7$ | $I_8$ | $I_9$ |
| EX   | $I_1$ | $I_2$  | $I_3 \xrightarrow{RAW} I_4$ | | | $I_4$ | $I_6 \xleftarrow{RAW} I_5$ | | $I_6$ | $I_7$ |
| WB   |       |        | $I_1$ | $I_2$     | $I_3$ |          |       | $I_4$    |       | $I_5$    |

210
X-ONLY?

YES → PUT INSTRUCTION INTO AC1 X — 212

NO

214
BUBBLE AT AC1 STAGE?

NO → EVALUATE POTENTIAL FOR DEPENDENCIES — 218

PLACE INSTRUCTION IN X OR Y PIPELINE TO REDUCE DEPENDENCIES — 220

YES → MOVE INSTRUCTION INTO BUBBLE TO SQUASH

216  *FIG. 8*

25a →

236 TRANSLATION CONTROL REGISTERS

TRANSLATION CONTROL — 238

*FIG. 9*

236

| | Physical Register 0 | Physical Register 1 | Physical Register 2 | | Physical Register 31 | |
|---|---|---|---|---|---|---|
| Logical ID Reg | LogID[2:0] | LogID[5:3] | LogID[8:6] | · · · | LogID[98:96] | 240 |
| Size Reg | Size[1:0] | Size[3:2] | Size[5:4] | · · · | Size[65:64] | 242 |
| Current Reg | Current[0] | Current[1] | Current[2] | · · · | Current[31] | 244 |
| Pending Reg | Pending[0] | Pending[1] | Pending[2] | · · · | Pending[31] | 246 |
| Chkpnt 0 Reg | Chkpnt0[0] | Chkpnt0[1] | Chkpnt0[2] | · · · | Chkpnt0[31] | |
| Chkpnt 1 Reg | Chkpnt1[0] | Chkpnt1[1] | Chkpnt1[2] | · · · | Chkpnt1[31] | 248 |
| Chkpnt 2 Reg | Chkpnt2[0] | Chkpnt2[1] | Chkpnt2[2] | · · · | Chkpnt2[31] | |
| Chkpnt 3 Reg | Chkpnt3[0] | Chkpnt3[1] | Chkpnt3[2] | · · · | Chkpnt3[31] | |
| AC1x Reg | AC1x[0] | AC1x[1] | AC1x[2] | · · · | AC1x[31] | |
| AC1y Reg | AC1y[0] | AC1y[1] | AC1y[2] | · · · | AC1y[31] | |
| AC2x Reg | AC2x[0] | AC2x[1] | AC2x[2] | · · · | AC2x[31] | 250 |
| AC2y Reg | AC2y[0] | AC2y[1] | AC2y[2] | · · · | AC2y[31] | |
| EXx Reg | EXx[0] | EXx[1] | EXx[2] | · · · | EXx[31] | |
| EXy Reg | EXy[0] | EXy[1] | EXy[2] | · · · | EXy[31] | |
| Reg Busy Reg | RegBusy[0] | RegBusy[1] | RegBusy[2] | · · · | RegBusy[31] | 252 |

*FIG. 10*

Chkpnt3[n] — — AC1x[n]
Chkpnt2[n] — — AC1y[n]
Chkpnt1[n] — — AC2x[n]
Chkpnt0[n] — — AC2y[n]
Current[n] — — EXx[n]
Pending[n] — — EXy[n]

254

252 — RegBusy [n]

*FIG. 11*

RECEIVE REQUEST
FOR ALLOCATION — 258

CHECK SIZE FOR
CURRENT REGISTER — 260

SIZE ≧
REQUIRED? — NO → STALL

262 — YES                    264

ALLOCATE NEW
REGISTER AS CURRENT — 266

*FIG. 12b*

AX

| AL | AH | | |

EAX

*FIG. 12a*

260

h/w Control —

μCode Control —

*FIG. 13*   μCode
Select

trans_id0 [2:0]      272         Phy_ID0 [4:0]

                                    5

COMPARE                PhysID_n — 5 — ▷

=                                    276

Logical ID_n — 3 —   Current_n —

                        274

3

270 →

3-8
DECODE            Pending_n — Current_n — 280a

                                                hazardEAX

                              280b
                                                hazardEBX

278                           280c  ● ● ● hazardECX

                              280g  hazardESP

*FIG. 14a*

32

trans_id0 [2:0]          Phy_ID0 [2:0]

270 — CELL 0                                  hazardESP
                                               hazardEAX

270 — CELL 1

270 — CELL 2                          . . .

270 — CELL 31

*FIG. 14b*

*FIG. 15a*

BEFORE FORWARDING

| MOV | 0 | 0 | | | 1 | | | |
|---|---|---|---|---|---|---|---|---|
| | SRC0 | WP0 | SRC1 | WP1 | DES0 | DES1 | | |

| ADD | 1 | 1 | 2 | 0 | 3 | | | |
|---|---|---|---|---|---|---|---|---|
| | SRC0 | WP0 | SRC1 | WP1 | DES0 | DES1 | | |

*FIG. 15b*

AFTER FORWARDING

| MOV | 0 | 0 | | | 1 | | | |
|---|---|---|---|---|---|---|---|---|
| | SRC0 | WP0 | SRC1 | WP1 | DES0 | DES1 | | |

| ADD | 0 | 0 | 2 | 0 | 3 | | | |
|---|---|---|---|---|---|---|---|---|
| | SRC0 | WP0 | SRC1 | WP1 | DES0 | DES1 | | |

*FIG. 16a*

BEFORE FORWARDING

| ADD | 0 | 0 | 1 | 0 | 2 | | | |
|---|---|---|---|---|---|---|---|---|
| | SRC0 | WP0 | SRC1 | WP1 | DES0 | DES1 | WBX | WBY |

| MOV | 2 | 1 | | | 3 | | | |
|---|---|---|---|---|---|---|---|---|
| | SRC0 | WP0 | SRC1 | WP1 | DES0 | DES1 | WBX | WBY |

*FIG. 16b*

AFTER FORWARDING

| ADD | 0 | 0 | 1 | 0 | 2 | | | |
|---|---|---|---|---|---|---|---|---|
| | SRC0 | WP0 | SRC1 | WP1 | DES0 | DES1 | WBX | WBY |

| MOV | | | | | 3 | | 1 | |
|---|---|---|---|---|---|---|---|---|
| | SRC0 | WP0 | SRC1 | WP1 | DES0 | DES1 | WBX | WBY |

FIG. 17a

FIG. 17b

FIG. 18

FIG. 19a

X — PIPELINE — Y

FIG. 19b